# EUROPEAN PATENT APPLICATION

(11) **EP 1 705 901 A2**
(43) Date of publication of application: **27.09.2006**
(21) Application number: 06110985.6
(22) Date of filing: 10.03.2006
(51) Int. Cl.: H04N 5/235

(54) **Image processing apparatus and method, recording medium, and program**

(30) Priority: 22.03.2005 JP 2005081890
(71) Applicant: OMRON CORPORATION, Kyoto-shi, Kyoto 600-8530 (JP)
(72) Inventor: Ando, Tanichi c/o OMRON Corporation,, Shimogyo-ku, Kyoto, Kyoto 600-8530 (JP); Ota, Shunji c/o OMRON Corporation, Shimogyo-ku, Kyoto, Kyoto 600-8530 (JP)
(74) Representative: Weihs, Bruno Konrad

(57) **Abstract**

It is an object of the present invention to allow easier acquisition of image data having the necessary luminosity range. The pixel value distribution detecting unit detects the distribution of the pixel values of the input image data, constituted by pixel values that are substantially proportional to the logarithm of the quantity of incident light. The extraction range setting means sets one or more extraction ranges, which are ranges of predetermined pixel values and have the same width, on the basis of the distribution of the pixel values of the input image data. The image extraction unit produces processed image data by extracting pixels having pixel values contained in the extraction ranges from the input image data, and supplies the processed image data thus produced to the image detecting unit. The present invention can be used in image detection devices.

## Description

### BACKGROUND OF THE INVENTION

### 1. Field of the Invention

The present invention relates to an image processing apparatus and method, a program and a recording medium, and more particularly relates to an image processing apparatus and method, program, and recording medium in which the number of gradations of image data is converted.

### 2. Description of the Related Art

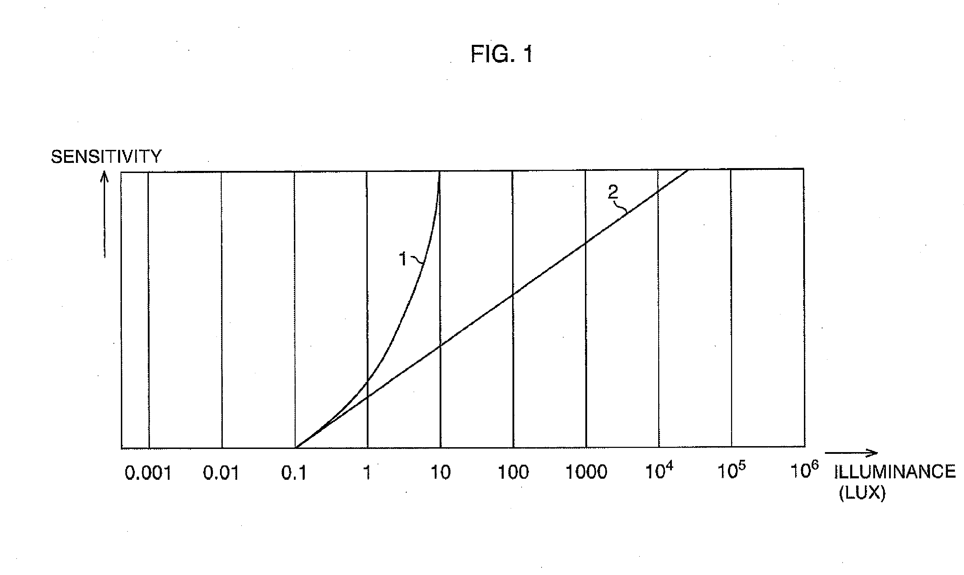

Fig 1 is a graph showing the sensitivity characteristics of a CCD (charge coupled device) image pickup element used in a conventional image pickup apparatus. The horizontal axis in Fig. 1 indicates the logarithm of the illuminance (units: lux) of the incident light, and the vertical axis indicates the sensitivity with respect to the illuminance of the incident light. Curve 1 indicates the sensitivity characteristics of the CCD image pickup element, and curve 2 indicates the sensitivity characteristics of the human eye. Furthermore, the sensitivity characteristics of a conventional CMOS (complementary metal oxide semiconductor) are substantially similar to the sensitivity characteristics of the CCD image pickup element indicated by curve 1.

As is shown in Fig. 1, the dynamic ranges of a conventional CCD image pickup element and CMOS (complementary metal oxide semiconductor) image pickup element are narrower than that of the human eye, showing a value of approximately 70 dB at the most. Accordingly, in the case of an image pickup apparatus using a CCD image pickup element, it is necessary to adjust the aperture or shutter speed so that the illuminance of the incident light is contained within the dynamic range of the CCD image pickup element, and in the case of image pickup that is performed out of doors or the like, it has not been possible to pick up all of the luminosity range of the object of imaging.

Accordingly, it has become possible to obtain images having a broad dynamic range by photographing the object of imaging at different shutter speeds, i.e., a high speed and a low speed, using an electronic shutter function, and then subjecting these two types of image signals to signal processing (for example, see Japanese Patent Application Laid-Open No. 2000-32303).

In cases where an object of imaging having a broad luminosity range is photographed, and the image data that is picked up is subjected to image processing, besides using a technique in which image data having a broad dynamic range acquired using the invention described in Japanese Patent Application Laid-Open No. 2000-32303 is subjected to image processing, it is also conceivable that a technique might be used in which a plurality of sets of image data having different luminosity ranges are acquired for the same object of imaging, and image data having an appropriate luminosity range is selected from this data and subjected to image processing.

For example, in order to acquire image data having different luminosity ranges, it is conceivable that a technique might be used in which the same object of imaging is continuously photographed while varying the amount of incident light, i.e., varying the luminosity range of the image data that is picked up, by adjusting the shutter time, aperture or the like as in the invention described in Japanese Patent Application Laid-Open No. 2000-32303.

Furthermore, it is conceivable that a technique might be used in which the same object of imaging is simultaneously photographed using a plurality of image pickup apparatus, with the amount of incident light of the respective image pickup apparatus being varied, i.e., with the luminosity range of the image data that is picked up being varied for each image pickup apparatus.

### SUMMARY OF THE INVENTION

However, in cases where the same object of imaging is photographed while the amount of incident light is varied, this object of imaging may move while the object is being photographed. In this case, furthermore, the time that is required in order to acquire all of the image data is increased. On the other hand, in cases where the same object of imaging is simultaneously photographed by means of a plurality of image pickup apparatus with the amount of incident light of the plurality of image pickup apparatus being varied, there is naturally a need for a plurality of image pickup apparatus; furthermore, the plurality of image pickup apparatus must be controlled so that the image pickup is synchronized. Moreover, since the viewing angle is different in the respective image pickup apparatus, it is impossible to acquire exactly the same image data for the object of imaging. Accordingly, image data having the required luminosity range cannot easily be acquired.

The present invention was devised in the light of such facts; it is an object of the present invention to allow easier acquisition of image data having the required luminosity range.

The image processing apparatus of the present invention comprises a range setting means for setting one or more extraction ranges constituting first ranges of a specified first width or less of the pixel values of first pixel data that is input, and image data production means for producing one or more sets of second image data by extracting pixels having pixel values contained in the abovementioned extraction ranges from the abovementioned first image data.

For example, the distribution detection means and image data production means are constructed from a calculating device such as a CPU (central processing unit), DSP (digital signal processor) or the like.

For example, the first width is set as the number of gradations (number of pixel values) of the image data that can be processed by the after-stage image processing apparatus, e.g., 1024 gradations.

In the image processing apparatus of the present invention, one or more extraction ranges constituting first ranges having not more than a specified width of pixel values of first image data that is input are set, and one or more sets of second image data are produced by extracting pixels having pixel values contained in the extraction ranges from the first image data.

Accordingly, image data having the required luminosity range (range of pixel values) can be acquired more easily.

In the image processing apparatus of the present invention, this device may further comprise a distribution detection means for detecting the distribution of the pixel values of the input first image data, and the range setting means may be devised so that the extraction ranges are set on the basis of the distribution of the pixels of the first image data.

For example, the distribution detection means is constructed from a calculating device such as such as a CPU (central processing unit), DSP (digital signal processor) or the like.

For example, the distribution of the pixel values of the first image data is set as the frequency distribution of the pixel values in the first image data.

Accordingly, image data having the required luminosity range (range of pixel values) can be acquired more easily and reliably.

In the image processing apparatus of the present invention, the extraction ranges may be set so that these ranges include first ranges centered on the mean values of the pixel values of the first image data.

Accordingly, the extraction ranges can be set in ranges where the pixel values of the first image data are most concentrated.

In the image processing apparatus of the present invention, the extraction ranges may be set so that these ranges include first ranges centered on the mean values of the pixel values of images in specified regions within the first image data.

Accordingly, the extraction ranges can be set in ranges where the pixel values within specified regions of the first image data are most concentrated.

In the image processing apparatus of the present invention, the extraction ranges may be set so that these ranges include first ranges that are centered on pixel values for which the number of pixels shows a maximum in the distribution of the pixel values of the first image data.

Accordingly, the extraction ranges can be set in ranges where the pixel values of the first image data are most concentrated.

In the image processing apparatus of the present invention, the range setting means can be devised so that, in cases where pixel values not contained in the extraction ranges exist among pixel values for which the number of pixels is equal to or greater than a specified threshold value in the distribution of the pixel values of the first image data, this range setting means further sets extraction ranges constituting first ranges which are centered on the pixel values for which the number of pixels reaches a maximum among the pixel values not contained in the extraction ranges.

Accordingly, ranges of pixel values for which the number of pixels is equal to or greater than a specified threshold value can be set as extraction ranges outside the ranges where the pixel values of the first image data are most concentrated.

In the image processing apparatus of the present invention, the range setting means can be devised so that in cases where pixel values not contained in the extraction ranges exist among pixel values for which the number of pixels is equal to or greater than the threshold value in the distribution of the pixel values of the first image data, this range setting means repeatedly sets extraction ranges constituting first regions which are centered on the pixel values for which the number of pixels reaches a maximum among pixel values not contained in the extraction ranges until the pixel values for which the number of pixels is equal to or greater than the threshold value are contained in one of the extraction ranges.

Accordingly, all of the pixel values for which the number of pixels is equal to or greater than a specified threshold value can be included in the extraction ranges.

In the image processing apparatus of the present invention, the range setting means can be devised so that in cases where a second range of pixel values, which is a range of pixel values including the mean value of the pixel values of the first image data, and in which the number of pixels is continuously equal to or greater than a specified threshold value, exceeds the first width, this range setting means sets the extraction ranges so that a plurality of contiguous extraction ranges as a whole include this second range, and the range setting means can be further devised so that in cases where the second range is equal to or less than the first width, the range setting means sets extraction ranges constituting first ranges which are centered on the mean values of the pixel values of the first image data.

Accordingly, the extraction ranges can be set in ranges where the pixel values of the first image data are most concentrated.

In the image processing apparatus of the present invention, the range setting means can be devised so that in cases where pixel values that are not contained in the extraction ranges exist among the pixel values for which the number of pixels is equal to or greater than the abovementioned threshold value in the distribution of the pixel values of the first image data, the range setting means further sets extraction ranges constituting first ranges which are centered on pixel values for which the number of pixels reaches a maximum among the pixel values not contained in the extraction ranges.

Accordingly, ranges of pixel values for which the number of pixels is equal to or greater than a specified threshold value can be set as extraction ranges outside the ranges where the pixel values of the first image data are most concentrated.

In the image processing apparatus of the present invention, the range setting means can be devised so that in cases where pixel values that are not contained in the extraction exist ranges among the pixel values for which the number of pixels is equal to or greater than the abovementioned threshold value in the distribution of the pixel values of the first image data, the range setting means repeatedly sets extraction ranges constituting first ranges which are centered on pixel values for which the number of pixels reaches a maximum among the pixel values not contained in the extraction ranges until the pixel values for which the number of pixels is equal to or greater than the threshold value are contained in one of the extraction ranges.

Accordingly, all of the pixel values for which the number of pixels is equal to or greater than a specified threshold value in the distribution of the pixel values of the first image data can be included in the extraction ranges.

In the image processing apparatus of the present invention, the range setting means can be devised so that in cases where a second range of pixel values which is a range of pixel values including the pixel values for which the number of pixels reaches a maximum in the distribution of the pixel values of the first image data, in which the number of pixels is continuously equal to or greater than a specified threshold value, exceeds the first width, the range setting means sets the extraction ranges so that a plurality of contiguous extraction ranges as a whole include the second range, and the range setting means can be further devised so that in cases where the second range is equal to or less than the first width, the range setting means sets extraction ranges constituting first ranges which are centered on the pixel values for which the number of pixels reaches a maximum in the distribution of the pixel values of the first image data.

Accordingly, the extraction ranges can be set in ranges where the pixel values of the first image data are most concentrated.

In the image processing apparatus of the present invention, the range setting means can be devised so that in cases where pixel values that are not contained in the extraction ranges exist among the pixel values for which the number of pixels is equal to or greater than the abovementioned threshold value in the distribution of the pixel values of the first image data, the range setting means further sets extraction ranges constituting first ranges which are centered on pixel values for which the number of pixels reaches a maximum among the pixel values not contained in the extraction ranges.

Accordingly, ranges of pixel values for which the number of pixels is equal to or greater than a specified threshold value can be set as extraction ranges outside the ranges where the pixel values of the first image data are most concentrated.

In the image processing apparatus of the present invention, the range setting means can be devised so that in cases where pixel values that are not contained in the extraction exist ranges among the pixel values for which the number of pixels is equal to or greater than the abovementioned threshold value in the distribution of the pixel values of the first image data, the range setting means repeatedly sets extraction ranges constituting first ranges which are centered on pixel values for which the number of pixels reaches a maximum among the pixel values not contained in the extraction ranges until the pixel values for which the number of pixels is equal to or greater than the threshold value are contained in one of the extraction ranges.

Accordingly, all of the pixel values for which the number of pixels is equal to or greater than a specified threshold value in the distribution of the pixel values of the first image data can be included in the extraction ranges.

In the image processing apparatus of the present invention, the range setting means can be devised so that that in cases where the second range between the minimum and maximum values of the pixel values for which the number of pixels is equal to or greater than a specified threshold value in the distribution of the pixel values of the first image data exceeds the first width, the range setting means sets the extraction ranges so that a plurality of contiguous extraction ranges as a whole include the second range, and the range setting means is further devised so that in cases where the second range is equal to or less than the first width, the range setting means sets extraction ranges constituting first ranges which include the second range.

Accordingly, all of the pixel values for which the number of pixels is equal to or greater than a specified threshold value in the distribution of the pixel values of the first image data can be included in the extraction ranges.

In the image processing apparatus of the present invention, the range setting means can be devised so that in cases where the second ranges exceed the first width for respective second ranges in which pixel values for which the number of pixels is equal to or greater than a specified threshold value in the distribution of the pixel values of the first image data continue over at least a specified second width of the pixel values, the range setting means sets the extraction ranges so that a plurality of contiguous extraction ranges as a whole include the second ranges, and the range setting means can be further devised so that in cases where the second ranges are equal to or less than the first width, the range setting means sets extraction ranges constituting first ranges which include the second ranges.

Accordingly, in the distribution of the pixel values of the first image data, pixel values having a small number of pixels, and pixel values corresponding to the peaks of a histogram in which the number of pixels is not continuously equal to or greater than a specified threshold value over a second threshold value range or longer, can be substantially excluded from the extraction ranges so that the extraction ranges can be efficiently set, and the number of extraction ranges can be kept to a small number.

In the image processing apparatus of the present invention, the range setting means can set extraction ranges constituting first ranges in which the second range between the minimum and maximum values that can be adopted by the pixel values of the first image data is divided into the first widths.

Accordingly, the system can be devised so that all of the pixel values that can be adopted by the first image data are included in the extraction ranges, and second image data having the required range of pixel values can always be acquired.

The image processing apparatus of the present invention may further comprise photographed object detection means for detecting specified objects of imaging within the second image data.

For example, this photographed object detection means can be constructed from a calculating device such as a CPU (central processing unit), DSP (digital signal processor) or the like.

Accordingly, images of specified objects of imaging that are photographed in the first image data can be detected using a smaller amount of processing.

In the image processing apparatus of the present invention, the dynamic range of the luminosity of first image data can be set so that this dynamic range is 70 dB or greater.

Accordingly, image data having the necessary luminosity range (range of pixel values) can be acquired more simply from first image data picked up at a dynamic range that does not allow image pickup in a single pass in the case of an image pickup apparatus using a conventional CCD image pickup element or CMOS image pickup element.

In the image processing apparatus of the present invention, this device can be devised so that the first image data is output by an image pickup apparatus having a logarithm conversion type image pickup element which outputs pixel values that are substantially proportional to the logarithm of the quantity of incident light, in use of sub-threshold characteristics of a semiconductor.

Accordingly, since the dynamic range of the first image data is broad, image data having the required luminosity range (range of pixel values) can be acquired more easily.

The image processing method and program of the present invention further comprise a range setting step for setting one or more extraction ranges that are equal to or less than a specified width of the pixel values of first image data that is input, and an image data production step in which one or more sets of second image data are produced by extracting pixels whose pixel values are contained in the extraction ranges, from the first image data.

For example, the distribution of the pixel values of the first image data is the frequency distribution of the pixel values in the first image data.

For example, the specified width is set as the number of gradations (number of pixel values) that can be processed by the after-stage image processing apparatus, e.g., 1024 gradations.

In the image processing method and program of the present invention, one or more extraction ranges constituting ranges (having a specified width or less) of the pixel values of first image data that is input are set, and one or more sets of second image data are produced by extracting pixels whose pixel values are contained in these extraction ranges, from the first image data.

Accordingly, image data having the required luminosity range (range of pixel values) can be acquired more easily.

The present invention makes it possible to vary the number of gradations of the image data. Furthermore, the present invention makes it possible to acquire image data having the required luminosity range (range of pixel values) more easily.

### BRIEF DESCRIPTION OF THE DRAWINGS

Fig. 1 is a graph showing the sensitivity characteristics of a CCD image pickup element or the like;
Fig. 2 is a block diagram showing one embodiment of the image processing system of the present invention;
Fig. 3 is a block diagram showing one embodiment of the image pickup apparatus shown in Fig. 2;
Fig. 4 is a graph showing the sensitivity characteristics of a logarithm conversion type image pickup element or the like;
Fig. 5 is a block diagram showing an example of the functional construction of the processed image production unit shown in Fig. 2;
Fig. 6 is a block diagram showing an example of the functional construction of the image detecting unit shown in Fig. 2;
Fig. 7 is a flow chart illustrating the image processing that is executed by the image processing system shown in Fig. 2;
Fig. 8 is a diagram showing an example of a histogram indicating the distribution of the pixel values of the input image data;
Fig. 9 is a diagram showing an example of the output image data;
Fig. 10 is a flow chart illustrating the details of an example of the main extraction range setting processing of step S3 in Fig. 7;
Fig. 11 is a diagram showing another example of a histogram indicating the distribution of the pixel values of the input image data;
Fig. 12 is a flow chart illustrating the details of another example of the main extraction range setting processing of step S3 in Fig. 7;
Fig. 13 is a flow chart illustrating the details of still another example of the main extraction range setting processing of step S3 in Fig. 7;
Fig. 14 is a diagram showing still another example of a histogram indicating the distribution of the pixel values of the input image data;
Fig. 15 is a flow chart illustrating the details of still another example of the main extraction range setting processing of step S3 in Fig. 7;
Fig. 16 is a flow chart illustrating the details of still another example of the main extraction range setting processing of step S3 in Fig. 7;
Fig. 17 is a flow chart illustrating the details of still another example of the main extraction range setting processing of step S3 in Fig. 7;
Fig. 18 is a flow chart illustrating the details of the secondary extraction range setting processing of step 5 in Fig. 7;
Fig. 19 is a flow chart illustrating the details of the image detection processing of step S7 in Fig. 7; and
Fig. 20 is a block diagram showing an example of the construction of the personal computer.

### DESCRIPTION OF THE PREFERRED EMBODIMENTS

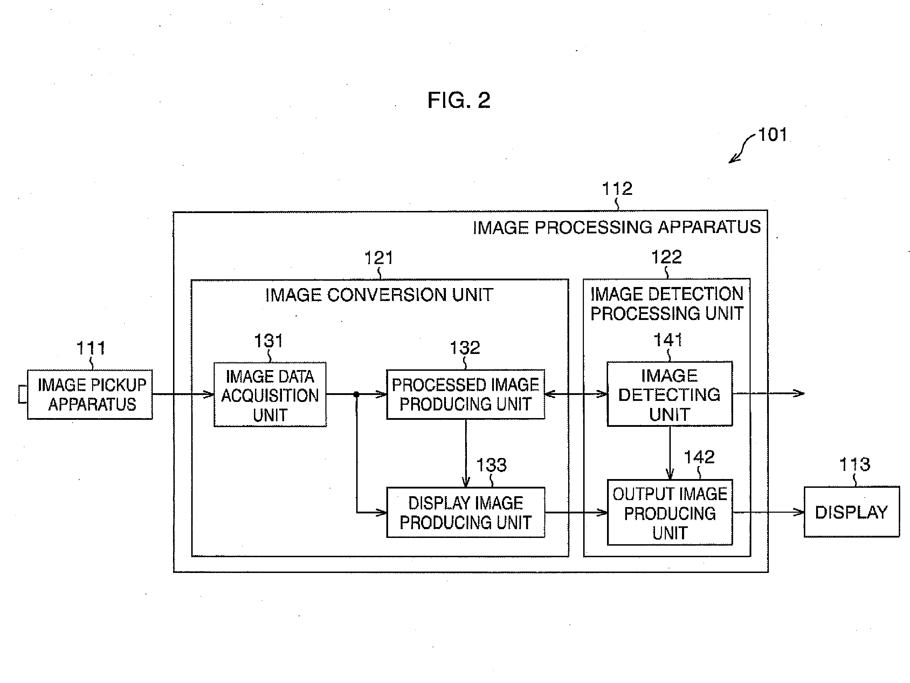

Fig. 2 is a diagram showing one embodiment of an image processing system 101 using the present invention. For example, this image processing system 101 is mounted in a vehicle, and detects images of specified photographed objects from image data obtained by viewing the area in front of the vehicle from inside the vehicle. Furthermore, the image processing system 101 displays images based on this acquired image data. The image processing system 101 is constructed so that this system comprises an image pickup apparatus 111, an image processing apparatus 112, and a display 113. Furthermore, the image processing apparatus 112 is constructed so that this device comprises an image conversion unit 121 and an image detection processing unit 122.

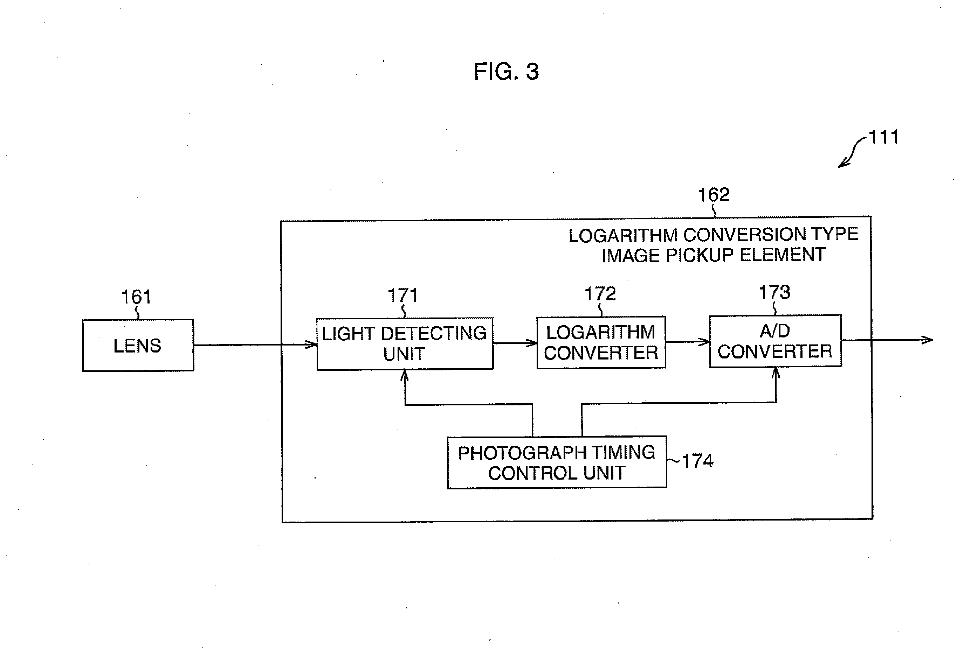

As will be described later with reference to Fig. 3, the image pickup apparatus 111 images objects of imaging over an extremely broad dynamic range (e.g., approximately 170 dB), and supplies the image data of the images of the photographed objects of imaging (hereafter also referred to as the "input image data") to the image conversion unit 121. For example, the input image data comprises 14 bits of binary digital image data with no code. Pixel values with 16,384 gradations ranging from darkest (0) to brightest (2¹⁴ - 1) are assigned to this image data.

The image conversion unit 121 produces image data that is obtained by converting the input image data into a number of gradation classes (e.g., 1024 gradation classes) that can be processed by the image detection processing unit 122, and supplies the image data thus produced to the image detection processing unit 122.

On the basis of the image data that is supplied from the image conversion unit 121, the image detection processing unit 122 detects specified objects of imaging among the objects of imaging that appear in this image data. The image detection processing unit 122 supplies data indicating the detection results to the image conversion unit 121 and an external image processing apparatus. Furthermore, the image detection processing unit 122 produces data (hereafter referred to as "output image data") that is emphasized so that the detected image of the object of imaging can easily be recognized by the user. The image detection processing unit 122 supplies this output image data to the display 113.

For example, the display 113 is constructed from a CRT (cathode ray tube), LCD (liquid crystal display) or the like, and displays images based on the output image data.

The image conversion unit 121 is constructed so that this part comprises an image data acquisition unit 131, a processed image producing unit 132, and a display image producing unit 133.

The image data acquisition unit 131 acquires input image data from the image pickup apparatus 111, and supplies input image data to the processed image producing unit 132 and display image producing unit 133.

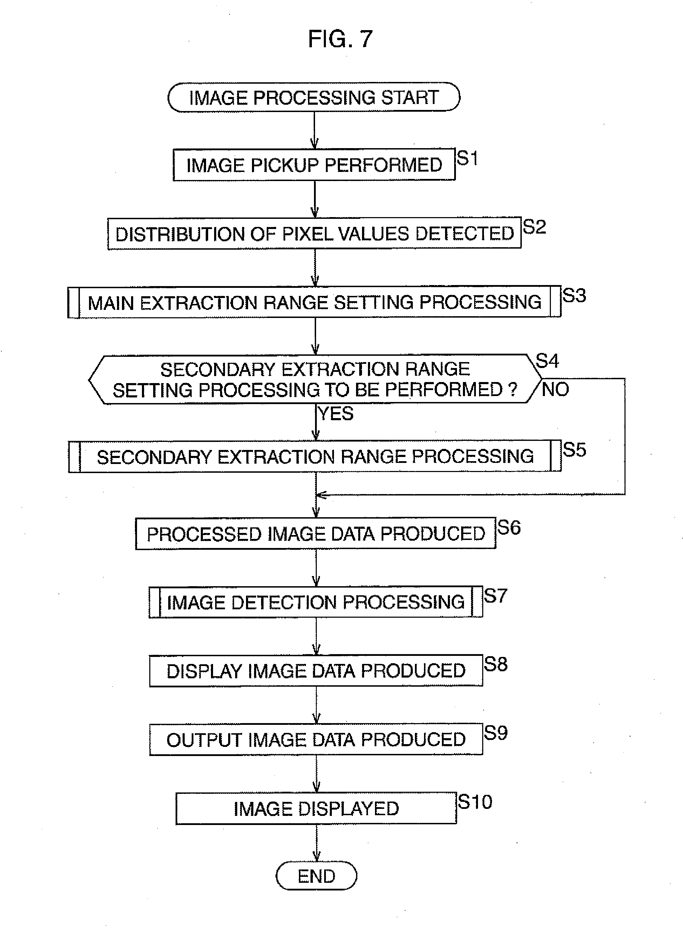

As will be described later with reference to Fig. 7, the processed image producing unit 132 produces image data (hereafter referred to a processed image data) which has a number of gradations that is equal to or less than the number of gradations that can be processed by the image detecting unit 141 of the image detection processing unit 122 (hereafter referred to as the number of processed gradations), i.e., a pixel value range width that is equal to or less than the pixel value range width that can be processed, from the input image data. The processed image producing unit 132 supplies the processed image data to the image detection processing unit 141. Furthermore, the processed image producing unit 132 detects the distribution of the pixel values of the input image data and supplies data indicating the distribution of the pixel values of the input image data to the display image producing unit 133 and image detecting unit 141.

As will be described later with reference to Fig. 7, the display image producing unit 133 produces image data (hereafter referred to as display image data) that is obtained by converting the input image data into a number of gradations that can be displayed by the display 113 (hereafter referred to as the number of display gradations). The display image producing unit 133 supplies this display image data to the output image producing unit 142.

The image detection processing unit 122 is constructed so that this unit comprises the abovementioned image detecting unit 141 and output image producing unit 142.

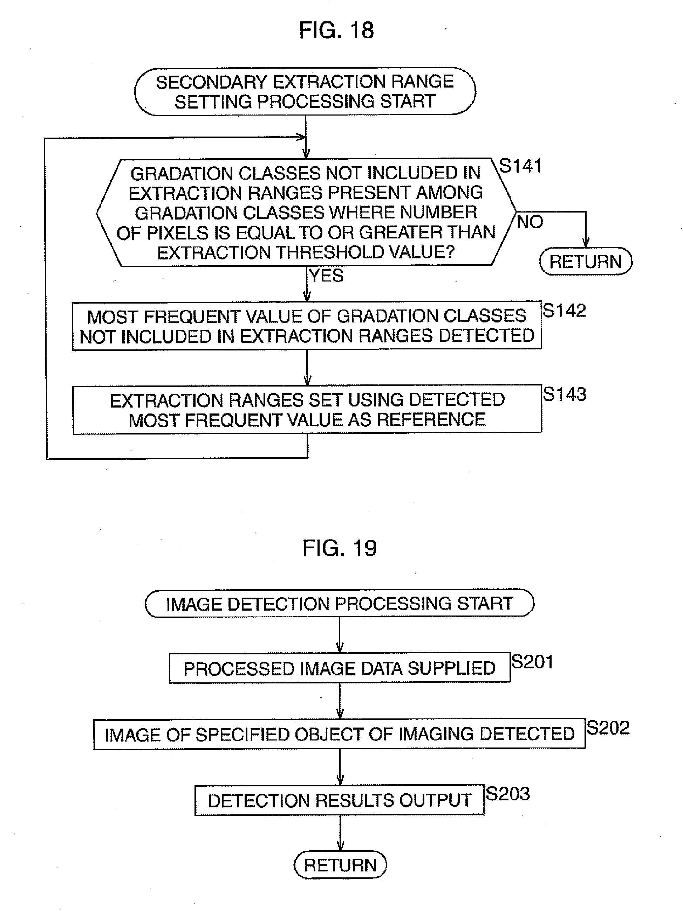

As will be described later with reference to Fig. 19, the image detecting unit 141 detects an image of a specified object of imaging from the processed image data. The image detecting unit 141 supplies data indicating the detection results to the processed image producing unit 132, the output image producing unit 142, and an external image processing apparatus.

As will be described later with reference to Fig. 7, the output image producing unit 142 produces output image data which is emphasized so that the images of objects of imaging detected by the image detecting unit 141 (among the objects of imaging appearing in the display image data) can easily be recognized by the user. The output image producing unit 142 supplies output image data to the display 113.

Fig. 3 is a block diagram showing one embodiment of the image pickup apparatus 111 shown in Fig. 2. The image pickup apparatus 111 is constructed so that this device comprises a lens 161 and a logarithm conversion type image pickup element 162. The logarithm conversion type image pickup element 162 is an HDRC (high dynamic range CMOS (complementary metal oxide semiconductor)) or another such logarithm conversion type image pickup element, for example, and is configured so as to include a light detecting unit 171, a logarithm converter 172, an A/D converter 173, and a photograph timing control unit 174.

The light emitted from subject photographed by the image pickup apparatus 111 (or the light reflected by the subject) is directed to the lens 161 and focused on the light detecting surface (not shown) of the light detecting unit 171 of the logarithm conversion type image pickup element 162.

The light detecting unit 171 is configured from a light receiving element or the like composed of a plurality of photodiodes, for example. The light detecting unit 171 converts the light from the subject focused by the lens 161 into an electric charge corresponding to the brightness (illuminance) of the irradiated light, and stores the converted electrical charge. The light detecting unit 171 supplies the stored electrical charge to the logarithm converter 172 in synchronization with the control signal supplied from the photograph timing control unit 174.

The logarithm converter 172 is configured from a plurality of MOSFETs (metal oxide semiconductor field effect transistors), for example. The logarithm converter 172 uses the sub-threshold characteristics of the MOSFETs to create analog electric signals by converting the electrical charges supplied from the light detecting unit 171 into voltage values substantially proportionate to the logarithm of the number of electrical charges (the strength of the electric current) for each pixel (the logarithm of the amount of light from the subject). The logarithm converter 172 supplies these created analog electric signals to the A/D converter 173.

The A/D converter 173 converts the analog electric signals to digital image data in synchronization with the control signals supplied from the photograph timing control unit 174. For example, when the analog signals are converted to 14-bit unsigned binary digital image data the pixel vales of the image data range from 0 for the darkest to 2¹⁴-1 for the brightest. The A/D converter 173 supplies the pixel values of the converted digital image data to an image processing apparatus 112.

Thus, the image pickup apparatus 111 outputs digital image data consisting of pixel values that are proportional to the logarithm of the brightness (quantity of incident light) of the light from the object of imaging that is incident on light detecting unit 171. Furthermore, details regarding logarithm conversion type image pickup element are disclosed in Domestic Publication No. 7-506932.

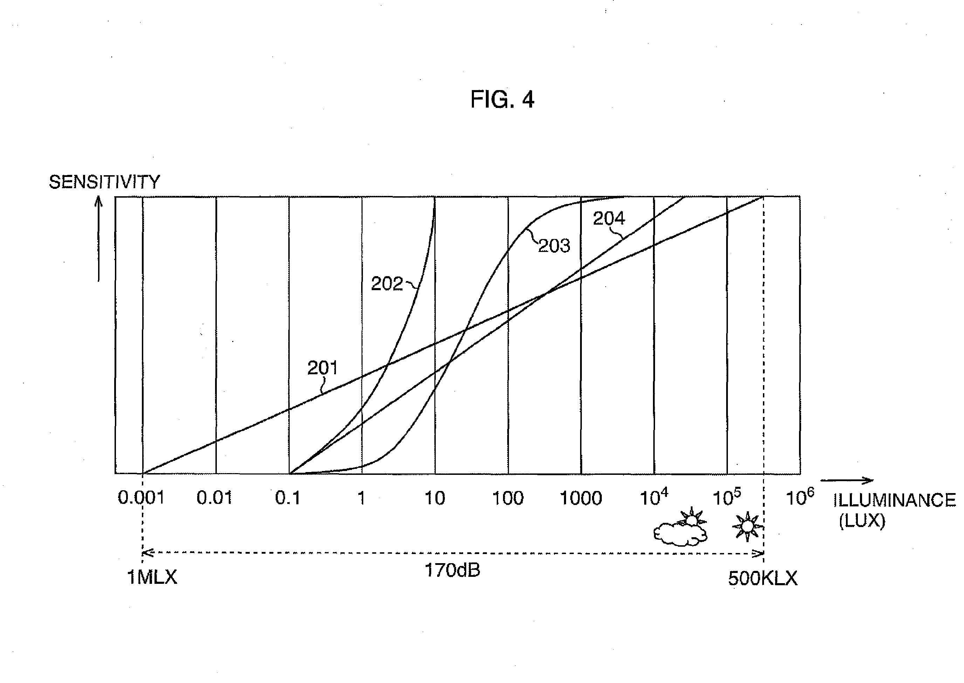

Fig. 4 is a graph showing the sensitivity characteristics of the logarithm conversion type image pickup element 162, a CCD image pickup element, a silver salt film, and the human eye. The horizontal axis in Fig. 4 indicates the illuminance (units: lux) of the incident light, and the vertical axis indicates the sensitivity with respect to the illuminance of the incident light. The curve 201 indicates the sensitivity characteristics of the logarithm conversion type image pickup element 162, the curve 202 indicates the sensitivity characteristics of a CCD image pickup element, the curve 203 indicates the sensitivity characteristics of a silver salt film, and the curve 204 indicates the sensitivity characteristics of the human eye. Furthermore, the curve 202 indicating the sensitivity characteristics of a CCD image pickup element corresponds to the curve 1 in Fig. 1, and the curve 204 indicating the sensitivity characteristics of the human eye corresponds to the curve 2 in Fig. 1.

The logarithm conversion type image pickup element 162 outputs image data consisting of pixel values substantially proportionate to the logarithm of the incident light as described above, whereby the subject can be photographed without saturating the capacity of the photodiodes or the MOSFETs constituting the logarithm conversion type image pickup element 162. The subject can also be photographed at a dynamic range that is about 170 dB and is wider than that of the CCD image pickup element, the silver salt film, or the human eye. The range extends from about 1 mlx to about 500 klx, which is greater than the luminosity of the sun.

Therefore, the amount of incident light does not need to be adjusted by adjusting the aperture or the shutter speed. This is because the image pickup apparatus 111 that uses the logarithm conversion type image pickup element 162 does not generate luminosity clipping in the luminosity range in which a human subject can be recognized. Specifically, the image pickup apparatus 111 can faithfully photograph the detailed luminosity distribution of the subject without adjusting the amount of incident light.

For example, when a photograph of the area in front of a car is taken from inside the car during the daytime and sunlight enters in a field of angular view, the luminosity distribution between the sunlight and the road is faithfully reproduced in the image photographed by the image pickup apparatus 111 without adjusting the amount of incident light. Also, when the area in front of a car is photographed from inside the car during the nighttime and the headlights of oncoming cars are visible from the front, the luminosity distribution spanning from the light of the oncoming headlights to areas not illuminated by the headlights of the photographer's car is faithfully reproduced in the image photographed by the image pickup apparatus 111 without adjusting the amount of incident light.

Also, with the CCD image pickup element and the silver salt film, the sensitivity characteristics are not proportionate to the logarithm of the illuminance of the incident light due to gamma characteristics and other such reasons, as shown by the curves 202 and 203, whereas with the logarithm conversion type image pickup element 162, the sensitivity characteristics are substantially proportionate to the logarithm of the illuminance of the incident light.

Thus, since the image pickup apparatus 111 using this logarithm conversion type image pickup element 162 is unaffected by the occurrence of luminosity clipping, adjustment of the amount of incident light or effects of the gamma characteristics, the pixel values of the image data acquired by the image pickup apparatus 111 fluctuate in a manner that reflects fluctuations in the luminosity of the object of imaging and movements of the object of imaging with a substantial degree of fidelity. In other words, the differential values of the respective pixels of differential data representing differences in the image data between frames are values in which fluctuations in the luminosity of the object of imaging and movements of the object of imaging are reflected with substantial fidelity.

Furthermore, since the pixel values of the image data that is output from the image pickup apparatus 111 are values that are substantially proportional to the logarithm of the quantity of incident light, the distribution of the pixel values in the image data obtained by photographing the object of imaging is a distribution in which the distribution of the reflectance of the object of imaging is substantially similarly reflected. For example, in a case where an object of imaging in which the ratio of the maximum value of the reflectance to the minimum value of the reflectance is 10 : 1 is photographed by illumination with light in which the difference in illuminance between the first time and second time is a difference of approximately 100 times, the widths of histograms indicating the distribution of the pixel values of the image data for the first time and the image data for the second time are substantially the same value (1 = log₁₀ 10). On the other hand, in cases where the pixel values of the image data are proportional to the quantity of incident light, the difference in the widths of histograms indicating the distribution of the pixel values of the image data for the first time and image data for the second time is approximately 100 times.

Furthermore, in cases where the luminosity of the object of imaging fluctuates at substantially the same ratio regardless of the distribution of the luminosity (reflectance) of the object of imaging, the fluctuation values of the pixel values of the image data obtained by photographing the object of imaging are substantially similar. For example, in a case in which there are two regions whose luminosity ratio is 100:1 inside the object of imaging, the illuminance of the light illuminating the object of imaging varies in a substantially uniform manner, and when the luminosity of the object of imaging fluctuates by substantially the same ratio of +5%, the fluctuation values of the pixel values corresponding to the two regions are substantially the same value (log₁₀ 1.05) . On the other hand, in cases where the pixel values of the image data are proportional to the quantity of incident light, the difference in the fluctuation values of the pixel values corresponding to the two regions described above is approximately 100 times.

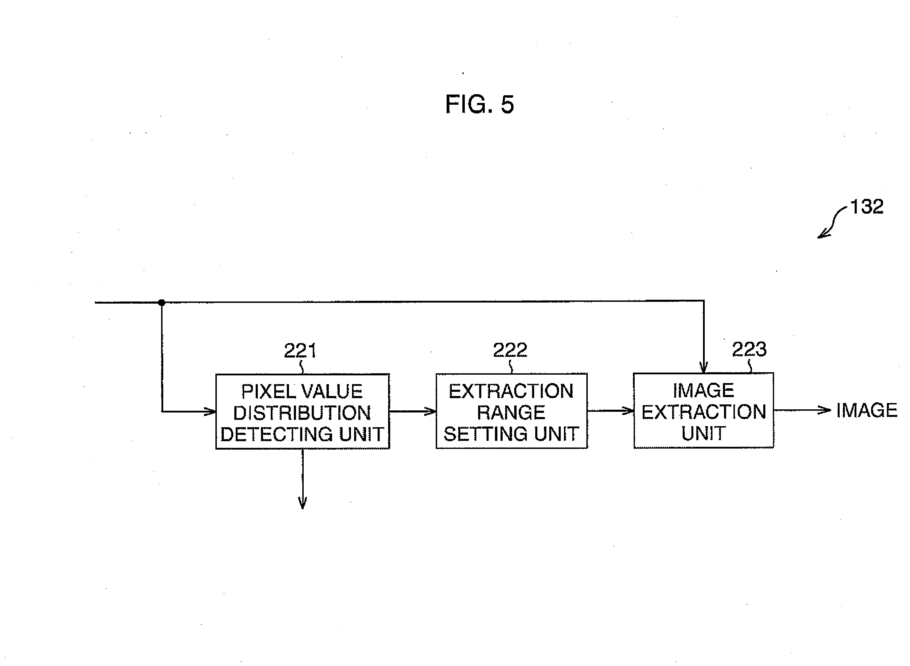

Fig. 5 is a block diagram showing an example of the functional construction of the processed image producing unit 132 shown in Fig. 2. The processed image producing unit 132 is constructed so that this unit comprises a pixel value distribution detecting unit 221, an extraction range setting unit 222, and an image extraction unit 223.

The pixel value distribution detecting unit 221 acquires input image data from the image data acquisition unit 131. As will be described later with reference to Fig. 7, the pixel value distribution detecting unit 221 detects the distribution of the pixel values of the input image data. The pixel value distribution detecting unit 221 supplies data that indicates the distribution of the pixel values of the input image data to the extraction range setting unit 222 and the display image producing unit 133. Furthermore, the distribution of the pixel values of the input image data detected by the pixel value distribution detecting unit 221 is a frequency distribution of the pixel values, and is not something that indicates the positions of the pixel values within the input image data.

As will be described later with reference to Fig. 7, the extraction range setting unit 222 sets one or more ranges of pixel values (hereafter referred to as extraction ranges) corresponding to a number of gradations of the image data that can be processed by the after-stage image detecting unit 141, on the basis of the distribution of the pixel values of the input image data. The extraction range setting unit 222 supplies the distribution of the pixel values of the input image data, and data indicating the set extraction ranges, to the image extraction unit 223.

The image extraction unit 223 acquires input image data from the image data acquisition unit 131. As will be described later with reference to Fig. 7, the image extraction unit 223 produces processed image data by extracting pixels having pixel values inside the extraction ranges from the input image data. The image extraction unit 223 supplies processed image data, data indicating the distribution of the pixel values of the input image data, and data indicating the extraction ranges of the respective processed image data, to the image detecting unit 141.

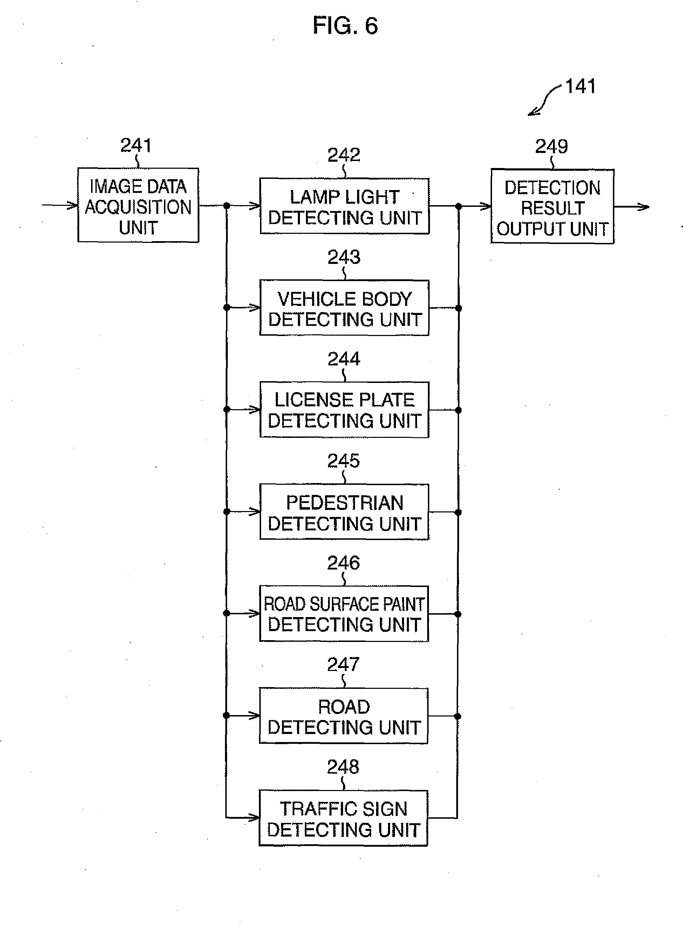

Fig. 6 is a block diagram showing an example of the functional construction of the image detecting unit 141. The image detecting unit 141 is constructed so that this unit comprises an image data acquisition unit 241, a lamp light detecting unit 242, a vehicle body detecting unit 243, a license plate detecting unit 244, a pedestrian detecting unit 245, a road surface paint detecting unit 246, a road detecting unit 247, a traffic sign detecting unit 248, and a detection result output unit 249.

The image data acquisition unit 241 acquires processed image data, data indicating the distribution of the pixel values of the input image data, and data indicating the extraction ranges of the respective processed image data, from the image extraction unit 223. As will be described later with reference to Fig. 19, the image data acquisition unit 241 selects processed image data suitable for the detection of images of objects of imaging that are objects of detection of the lamp light detecting unit 242, vehicle body detecting unit 243, license plate detecting unit 244, pedestrian detecting unit 245, road surface paint detecting unit 246, road detecting unit 247 or traffic sign detecting unit 248, and supplies the selected processed image data to the respective detecting units.

As will be described later with reference to Fig. 19, the lamp light detecting unit 242 detects images of objects of imaging that emit light themselves, such as vehicle illumination, light leaking to the outside from the windows of buildings, beacons, self-lit display panels and the like. The lamp light detecting unit 242 supplies data indicating the detection results to the detection result output unit 249.

As will be described later with reference to Fig. 19, the vehicle body detecting unit 243 detects images of vehicle bodies from the processed image data. The vehicle body detecting unit 243 supplies data indicating the detection results to the detection result output unit 249.

As will be described later with reference to Fig. 19, the license plate detecting unit 244 detects images of the license plates of vehicles from the processed image data. The license plate detecting unit 244 supplies data indicating the detection results to the detection result output unit 249.

As will be described later with reference to Fig. 19, the pedestrian detecting unit 245 detects images of persons such as pedestrians or the like, or images of various types of obstructions on the road, from the processed image data. The pedestrian detecting unit 245 supplies data indicating the detection results to the detection result output unit 249.

As will be described later with reference to Fig. 19, the road surface paint detecting unit 246 detects images of various types of lines and marks or the like that are painted on the road surface such as center lines, signs, crosswalks, stop lines or the like. The road surface paint detecting unit 246 supplies data indicating the detection results to the detection result output unit 249.

As will be described later with reference to Fig. 19, the road detecting unit 247 detects images of roads from the processed image data. The road detecting unit 247 supplies data indicating the detection results to the detection result output unit 249.

As will be described later with reference to Fig. 19, the traffic sign detecting unit 248 detects images of various types of traffic signs from the processed image data. The traffic sign detecting unit 248 supplies data indicating the detection results to the detection result output unit 249.

The detection result output unit 249 outputs data indicating the detection results supplied from the lamp light detecting unit 242, vehicle body detecting unit 243, license plate detecting unit 244, pedestrian detecting unit 245, road surface paint detecting unit 246, road detecting unit 247 and traffic sign detecting unit 248 to the processed image producing unit 132, output image producing unit 142, and external image processing apparatus.

Next, the image processing that is performed by the image processing system 101 will be described with reference to the flow chart shown in Fig. 7. Furthermore, for example, this processing is initiated when a command to start image processing is input into the image processing apparatus 112 by the user.

In step S1, the image pickup apparatus 111 acquires image data, and outputs this acquired image data (input image data) to the image data acquisition unit 131. The image data acquisition unit 131 supplies the acquired input image data to the display image producing unit 133, pixel value distribution detecting unit 221, and image extraction unit 223.

In step S2, the pixel value distribution detecting unit 221 detects the distribution of the pixel values. In concrete terms, the pixel values distribution detecting unit 221 divides the range of values that can be adopted by the pixel values of the input image data (e.g., 16,384) into a specified number of gradation classes (e.g., 1024 gradation classes), and detects the gradation classes to which the pixel values of the respective pixels in the input image data belong. Then, the distribution of the pixel values of the input image data, i.e., the frequency distribution of the pixel values of the input image data , is detected by calculating the number of pixels (frequency of pixels) belonging to each gradation. The pixel value distribution detecting unit 221 supplies data indicating the distribution of the pixel values of the input image data to the display image producing unit 133 and extraction range setting unit 222. Below, furthermore, the gradation values of the respective gradation classes are taken as intermediate values between the minimum values and maximum values of the pixel values contained in the respective gradation classes.

Furthermore, the system may also be devised so that the distribution of the pixel values is detected without dividing the data into gradation classes.

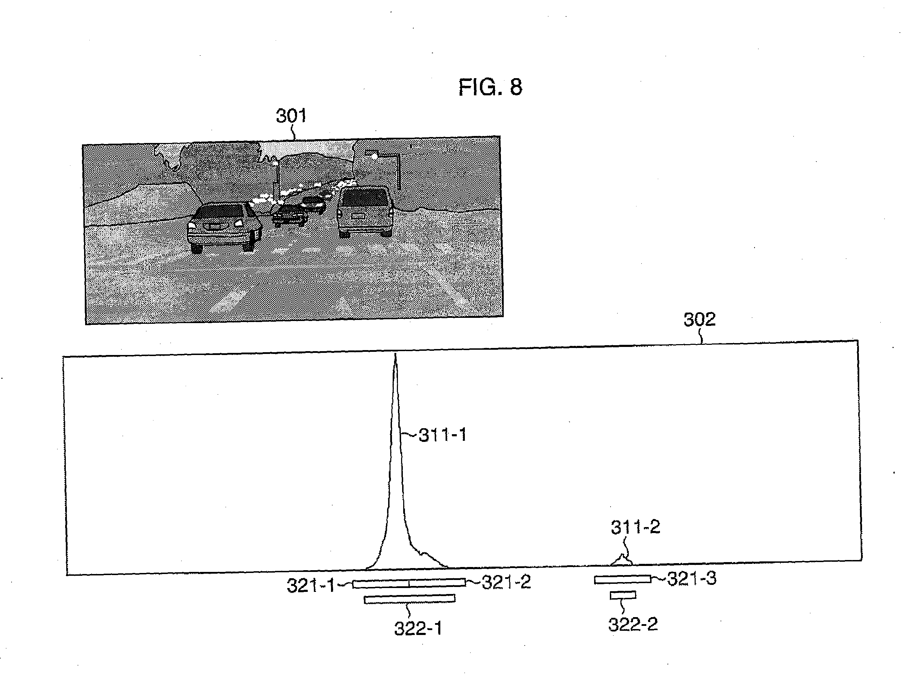

Fig. 8 shows an example of a histogram indicating the distribution of the pixel values of the input image data. Specifically, the histogram 302 in Fig. 8 shows the distribution of the pixel values of the input image data 301 shown in schematic form in Fig. 8.

The input image data 301 is image data obtained by photographing the area in front of a vehicle from the interior of this vehicle (which is operating on a city street at night). In cases where image pickup is performed out of doors at night without using illumination, the luminosity of almost all objects of imaging is concentrated in a narrow range that is close to the surrounding brightness; accordingly, a peak 311-1 having a narrow width and an extremely large peak value appears in the histogram 302. On the other hand, images of objects of imaging that emit light themselves, such as the light of headlights and taillights of vehicles, street lamps, traffic signals and the like occupy a small proportion of the viewing angle, and are much brighter than the surrounding areas; accordingly, a peak 311-2 having a small peak value appears in the histogram 302 in a position that is separated from the peak 311-1.

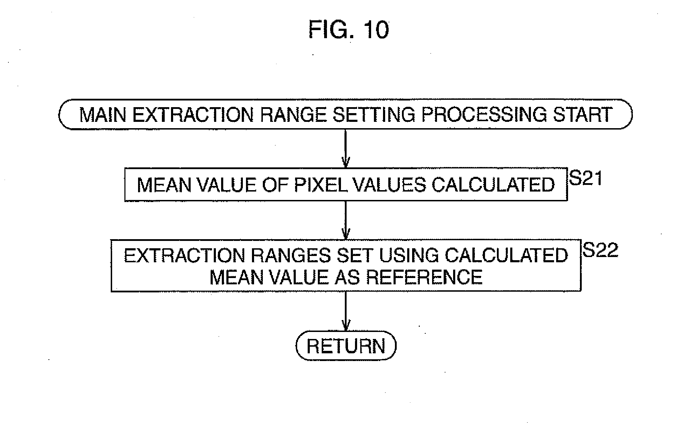

In step S3, the extraction range setting unit 222 executes the main extraction range setting processing. Details of this main extraction range setting processing will be described later with reference to Figs. 10 through 16; as a result of this processing, for example, extraction ranges 321-1 and 321-2 corresponding to the peak 301 having the maximum peak value of the histogram shown in Fig. 8 are set.

In step S4, the extraction range setting unit 222 judges whether or not to execute secondary extraction range setting processing. For example, in cases where the extraction range setting unit 222 judges on the basis of a setting by the user or the like that secondary extraction range setting processing is to be executed, the processing proceeds to step S5.

In step S5, the extraction range setting unit 222 performs secondary extraction range setting processing. Details of this secondary extraction range setting processing will be described later with reference to Fig. 18; as a result of this processing, for example, an extraction range 321-3 is set which corresponds to the peak 302 located in a position that is separated from the peak 301 that has the maximum peak value of the histogram shown in Fig. 8.

In step S6, the image extraction unit 223 produces processed image data. Specifically, for each of the respective extraction ranges set in steps S3 and S5, the image extraction unit 223 produces processed image data by extracting pixels whose pixel values are contained in the extraction ranges, from the input image data. In concrete terms, the image extraction unit 223 assigns pixel values corresponding to the processing gradation number to pixels whose pixel values are within the extraction ranges (among the respective pixels of the input image data). Furthermore, the image extraction unit 223 assigns the minimum pixel value to pixels whose pixel values in the input image data are smaller than the pixel values in the extraction ranges, and assigns the maximum pixel value to pixels whose pixel values in the input image data are greater than the pixel values in the extraction ranges.

For example, in a case where the processing gradation number is 1024 gradations, pixel values from 0 to 1023 are assigned in order from 0 to pixels having pixel values within the extraction ranges (among the respective pixels of the input image data), beginning from the pixels having the smallest pixel value. Furthermore, a pixel value of 0 is assigned to pixels whose pixel values are smaller than the pixel values within the extraction ranges, and a pixel value of 1023 is assigned to pixels whose pixel values are larger than the pixel values within the extraction ranges. The image extraction unit 223 produces one or more sets of processed image data by performing this pixel value conversion processing for each extraction range.

Furthermore, the image extraction unit 223 may also be devised so that after this unit has extracted pixels having pixel values contained in the extraction ranges from the input image data, this unit subjects the respective pixel values to a reverse logarithmic conversion, divides the range of the pixel values that have been subjected to a reverse logarithmic conversion by the processing gradation number, and assigns pixel numbers corresponding to processing gradation number to the respective ranges obtained as a result of this division.

Furthermore, the image extraction unit 223 may be devised so that in cases where the range of the pixel values contained in the extraction ranges is narrower than the processing gradation number, the pixel values that are assigned to the pixels whose pixel values are within the extraction ranges are thinned according to a specified pattern.

The image extraction unit 223 supplies processed image data, data indicating the distribution of the pixel values of the input image data, and data indicating the extraction ranges of the respective sets of processed image data, to the image data acquisition unit 241.

In step S7, the image detecting unit 141 performs image detection processing. The details of this image detection processing will be described later with reference to Fig. 19; as a result of this processing, images of specified objects of imaging are detected from the processed image data.

In step S8, the display image producing unit 133 produces display image data. In concrete terms, for example, the display image producing unit 133 divides a range combining the range 322-1 and range 322-2 (where the number of pixels is greater than the specified threshold value in the histogram 302 for the input image data 301 shown in Fig. 8) by the number of display gradations of the display 113, and assigns gradation values corresponding to the display gradation number to the respective ranges obtained as a result of this division. Furthermore, the display image producing unit 133 assigns the minimum value of the gradation values to pixels whose pixel values are smaller than the pixel values within the range 322-1, and assigns the maximum value of the gradation values to pixels whose pixel values are greater than the pixel values within the range 322-2. Moreover, the display image producing unit 133 assigns the maximum value of the gradation values assigned to the range 322-1 (to pixels whose pixel values are between the range 322-1 and 322-2.

For example, in a case where the display gradation number of the display 113 is 1024 gradations, the range obtained by combining the range 322-1 and the range 322-2 is divided into 1024 parts, and gradation values from 0 to 1023 are assigned in order to the respective ranges obtained as a result of this division, beginning with the range of the smallest pixel values. Furthermore, a gradation value of 0 is assigned to pixels whose pixel values are smaller than the pixel values within the range 322-1, and a gradation value of 1023 is assigned to pixels whose pixel values are greater than the pixel values within the range 322-2. Moreover, the maximum value of the gradation values assigned to the range 322-1 is assigned to pixels whose pixel values are between the range 322-1 and the range 322-2.

As a result, display image data in which the gradation number of the input image data is converted into the display gradation number of the display 113, while suppressing any deterioration in image quality.

Furthermore, the system may also be devised so that the gradation width of the gradations assigned to the range 322-1 corresponding to the peak 311-1 that has a large number of pixels is made narrow, while the gradation width of the gradations assigned to the range 322-2 corresponding to the peak 311-2 that has a small number of pixels is made broad. As a result, the number of gradations assigned to the range 322-1 which has a large number of pixels is increased, so that images based on the display image data can be displayed with a greater sharpness.

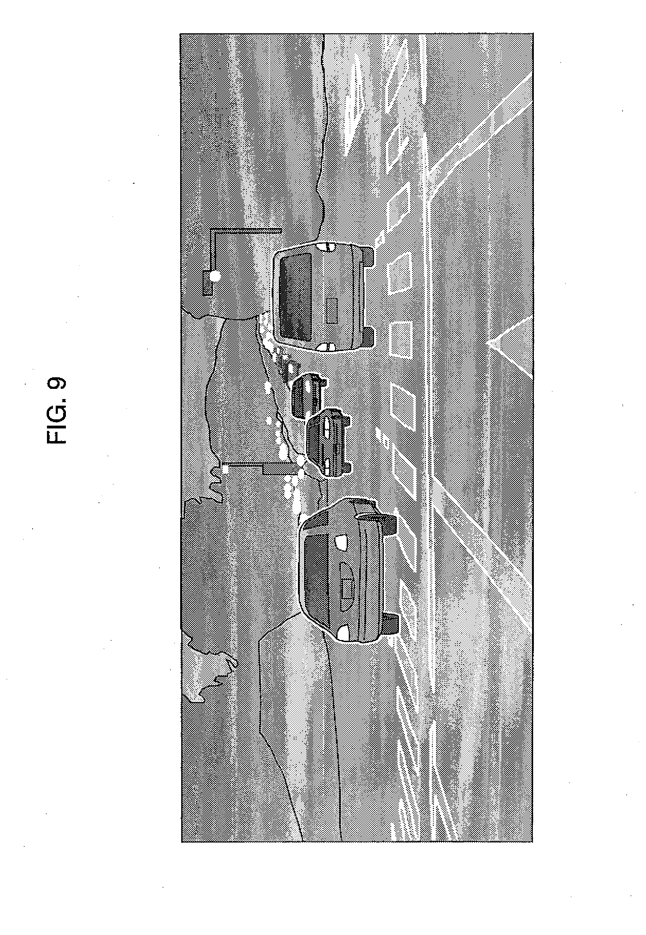

In step S9, the output image producing unit 142 produces output image data. In concrete terms, the output image producing unit 142 produces image data (output image data) in which objects of imaging detected by the image detecting unit 141 (among the objects of imaging in the display image data) are emphasized. For example, as is shown in Fig. 9, output image data is produced in which vehicles and the outlines of lines or marks painted on the road that are detected by the image detecting unit 141 are emphasized. By viewing images based on this output image data, the user can recognize objects of imaging detected by the image detecting unit 141 more quickly and reliably.

In step S10, the display 113 displays images based on the output image data, and the image processing is ended.

Next, details of the main extraction range setting processing of step S3 in Fig. 7 will be described with reference to the flow chart shown in Fig. 10.

In step S21, the extraction range setting unit 222 calculates the mean value of the pixel values of the input image data.

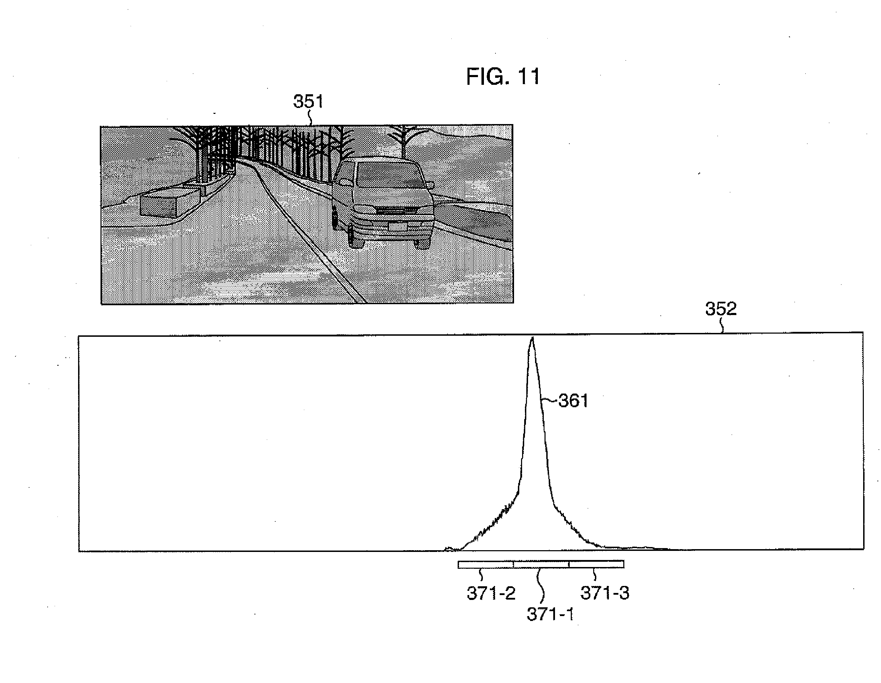

In step S22, the extraction range setting unit 222 sets extraction ranges using the calculated mean value as a reference, and the main extraction range setting processing is ended. Details of the processing of step S22 will be described below with reference to Fig. 11.

The histogram 352 shown in Fig. 11 shows the distribution of the pixel values of the input image data 351 shown in schematic form in Fig. 11. The input image data 351 is image data obtained by photographing the area in front of a vehicle traveling through a suburban area in the daytime on a cloudy day (with this imaging being performed from inside the vehicle). There are no objects of imaging that are extremely bright compared to the surrounding area or objects of imaging that are extremely dark compared to the surrounding area within the viewing angle of the input image data 351, such as objects of imaging that are illuminated by direct sunlight, objects of imaging that are in the shadow of direct sunlight, objects of imaging that emit light themselves or the like; consequently, the brightness values of almost all of the objects of imaging are concentrated in a narrow range. Accordingly, a single peak 361 having a narrow width and an extremely large peak value appears in the histogram 352.

Furthermore, for example, in cases where a scene with normal light and little shadow is photographed on a clear day, a single peak having a narrow width and an extremely large peak value appears in a histogram of the input image data, in the same manner as in the histogram 352. Moreover, for example, in cases where a scene that is substantially uniformly illuminated by a light source that does not appear in the viewing angle is photographed at night, a single peak having a narrow width and an extremely large peak value appears in a histogram of the input image data, in the same manner as in the histogram 352.

First, the extraction range setting unit 222 sets an extraction range 371-1, which is a range that includes pixel values equal to or less than the processing gradation number, and which is centered on the mean value of the pixel values. Furthermore, the range of pixel values of a specified width including pixel values equal to the processing gradation number will hereafter also be referred to as the "set reference range".

Furthermore, in cases where the number of pixels of the gradation class immediately preceding the extraction range 371-1 (on the left side) is equal to or greater than a specified threshold value (hereafter referred to as the "extraction threshold value"), the extraction range setting unit 222 sets an extraction range 371-2 having a width that is equal to or less than the set reference range adjacent to the left side of the extraction range 371-1. Subsequently, similar processing is repeated and extraction ranges are set until the number of pixels of the gradation class immediately preceding the set extraction ranges (on the left side) is less than the extraction threshold value. Furthermore, in cases where the number of pixels of the gradation class immediately following the extraction range 371-1 (on the right side) is equal to or greater than the extraction threshold value, the extraction range setting unit 222 sets an extraction range 371-3 having a width that is equal to or less than the set reference range adjacent to the right side of the extraction range 371-1. Subsequently, similar processing is repeated and extraction ranges are set until the number of pixels of the gradation class immediately following the set extraction ranges (on the right side) is less than the extraction threshold value.

Accordingly, in cases where a range of gradation classes (pixel values) including the mean value of the pixel values of the input image data, in which the number of pixels is continuously equal to or greater than the object of extraction (hereafter referred to as the "range in which the mean values of the input image data are extracted"), exceeds the set reference range, extraction ranges are set so that a plurality of contiguous extraction ranges as a whole include the range in which the mean values of the input image data are extracted. Furthermore, in cases where the range in which the mean values of the input image data are extracted is equal to or less than the set reference range, extraction ranges are set which have a width that is equal to or less than the set reference range and which are centered on the mean value of the pixel values of the input image data.

Furthermore, as another method of setting the extraction ranges, the system may be devised so that ranges having a specified width which are centered on the mean value of the pixel values of the input image data are set as the extraction ranges. For example, the system may be devised so that three extraction ranges obtained by dividing a range having three times the width of the set reference range centered on the mean value of the pixel values of the input image data into three equal units are set.

Furthermore, the system may also be devised so that extraction ranges are set by a method similar to the abovementioned method using not only the mean value of the pixel values of the input image data as a whole, but also the mean value of the pixel values within a specified region of the input image data. For example, the extraction range setting unit 222 is devised so that this unit sets extraction ranges using as a reference the mean value of the pixel values within a region where the presence of objects of imaging that are to be photographed may be predicted (e.g., the region in which a road surface appears in the lower central part of the input image data 351 in Fig. 11), or within a region whose extraction from the input image data is especially desired. As a result, regardless of any differences in the distribution of the pixel values of the input image data, processed image data in which all or most of the pixels contained in mages within specified regions have been extracted from the input image data can be reliably acquired.

The extraction range setting unit 222 supplies data indicating the distribution of the pixel values of the input image data and the set extraction ranges to the image extraction unit 223.

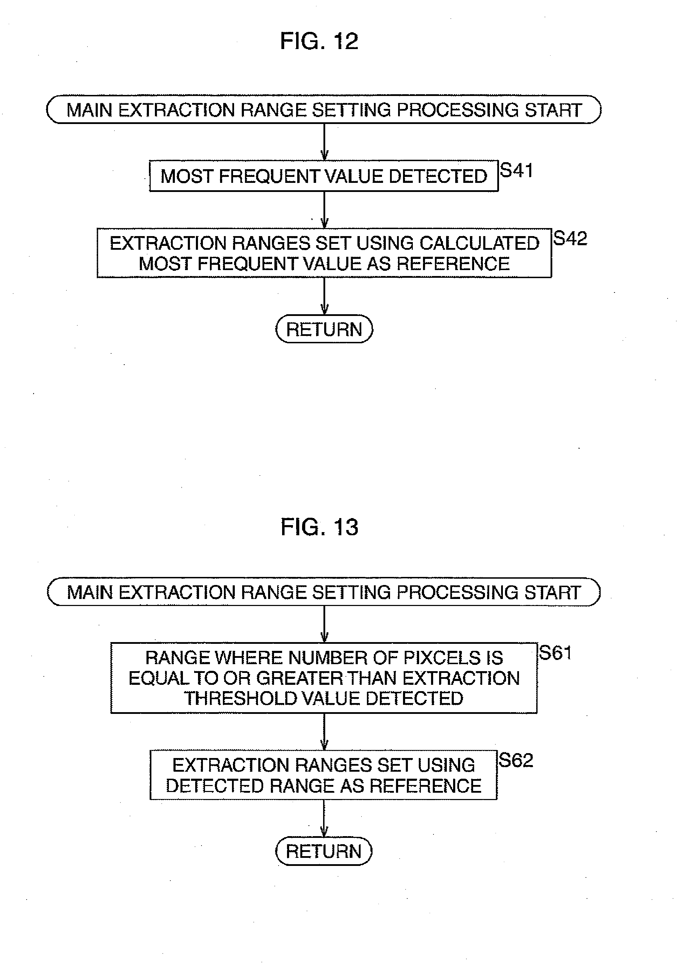

Next, the details of another example of the main extraction range setting processing of step S3 in Fig. 7 will be described with reference to Fig. 12.

In step S41, the extraction range setting unit 222 detects the most frequent value of the pixel values of the input image data. In other words, the gradation class value of the gradation class in which the number of pixels shows a maximum value in the distribution of the pixel values of the input image data is detected.

In step S42, the extraction range setting unit 222 sets extraction ranges using the detected most frequent value as a reference, and the main extraction range setting processing is ended. In concrete terms, the extraction range setting unit 222 performs processing similar to that of step S22 in Fig. 10 using the most frequent value of the distribution of the pixel values of the input image data as a reference instead of the mean value of the pixel values of the input image data.

As a result, in cases where a range of gradation classes (pixel values) including the most frequent value of the pixel values of the input image data, in which the number of pixels is continuously equal to or greater than the object of extraction (hereafter referred to as "input image data most-frequent value extraction object range") exceeds the set reference range, extraction ranges are set so that a plurality of contiguous extraction ranges as a whole include the input image data most-frequent value extraction object range. Furthermore, in cases where the input image data most-frequent value extraction object range is equal to or less than the set reference range, extraction ranges are set which have a width that is equal to or less than the set reference range, and which are centered on the most frequent value of the pixel values of the input image data.

Furthermore, as another method of setting the extraction ranges, specified ranges that are centered on the most frequent value of the input image data may be set as the extraction ranges. For example, the system may also be devised so that three extraction ranges three extraction ranges obtained by dividing a range having three times the width of the set reference range centered on the most frequent value of the pixel values of the input image data into three equal parts are set.

For example, in cases where the peaks of the histogram are dispersed as in the histogram 302 shown in Fig. 8, the mean value of the pixel values of the input image data deviates from the histogram peak that shows the maximum peak value (such as the peak 311-1), so that in cases where the mean value of the pixel values of the input image data is used as a reference, it may not be possible to set the extraction ranges in an appropriate manner. However, this problem can be solved by using the most frequent value of the pixel values of the input image data as a reference.

Next, the details of still another example of the main extraction range setting processing of step S3 in Fig. 7 will be described with reference to the flow chart shown in Fig. 13.

In step S61, the extraction range setting unit 222 detects the range in which the number of pixels is equal to or greater than the extraction threshold value in the distribution of the pixel values of the input image data. In concrete terms, the extraction range setting unit 222 detects the range between the gradation class having the minimum gradation class value (hereafter referred to as the "minimum extraction gradation class") among the gradation classes in the distribution of the pixel values of the input image data and the gradation class having the maximum gradation class value (hereafter referred to as the "maximum extraction gradation class").

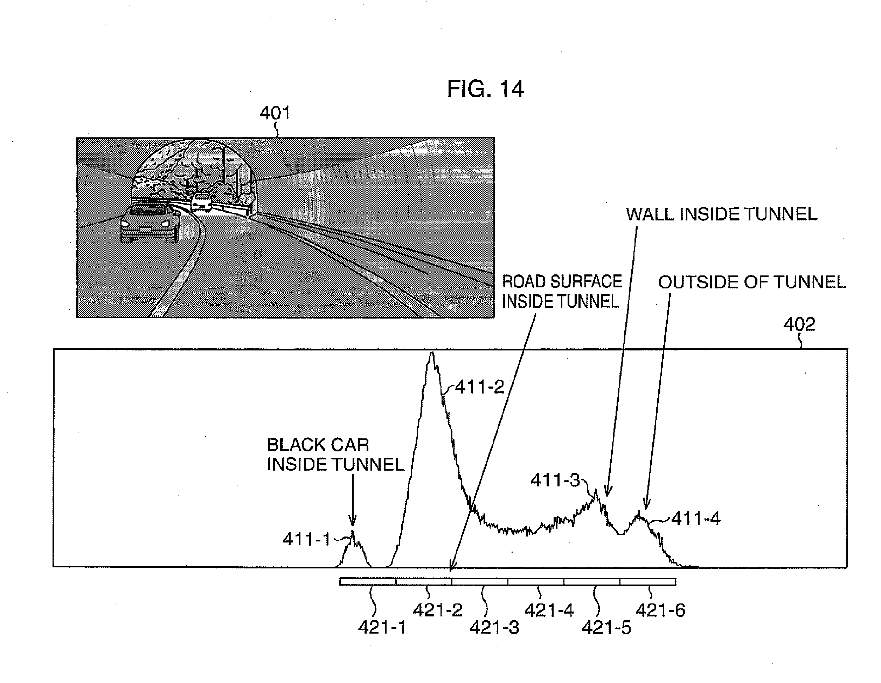

The processing of the flow chat shown in Fig. 12 will be described below with reference to Fig. 14.

The histogram 402 in Fig. 14 shows the distribution of the pixel values of the input image data 401 that is shown schematically in Fig. 14. The input image data 401 is image data obtained by photographing the area in front of a vehicle traveling through a tunnel near the exit of this tunnel in the daytime on a clear day (with this photographing being performed from inside the tunnel). In the input image data 401, almost all of the parts show the dark road surface inside the tunnel; furthermore, white walls inside the tunnel, which have a somewhat higher brightness than the road surface, and portions outside the tunnel, which have an extremely high brightness, also appear. Furthermore, the input image data 401 also shows a black vehicle inside the tunnel, which has a much lower brightness than the road surface inside the tunnel.

Since the distribution of the luminosity of the objects of imaging is thus broad, the pixel values of the input image data 401 are distributed in some numbers of pixels over a broad range, as is indicated in the histogram 402. Furthermore, the peak 411-1 of the histogram 402 reflects mainly the number of pixels of the image of the black vehicle inside the tunnel, the peak 411-2 reflects mainly the number of pixels of the image of the road surface inside the tunnel, the peak 411-3 reflects mainly the number of pixels of the image of the walls inside the tunnel, and the peak 411-4 reflects mainly the number of pixels of the image of the outside of the outside of the tunnel.

Furthermore, a gradation class corresponding to a position slightly to the right of the left end of the peak 411-1 is detected as the minimum extraction gradation class, and a gradation class corresponding to a position slightly to the left of the right end of the peak 411-4 is detected as the maximum extraction gradation class.

Furthermore, for example, in a case where regions illuminated by illumination with respectively different illuminance values at night are present within the viewing angle, the histogram of the input image data shows pixel values distributed in considerable numbers of pixels over a broad range in the same manner as in the histogram 402. Furthermore, since the illuminance of the illumination varies according to the distance from the illumination to the object of imaging, there may be cases where the histogram of the photographed input image data shows pixel values distributed in considerable number of pixels over a broad range in the same manner as in the histogram 402.

In step S62, the extraction range setting unit 222 sets the extraction ranges using the detected range as a reference. In concrete terms, the extraction range setting unit 222, using the minimum value of the pixel values contained in the minimum extraction gradation class as a reference, continuously sets extraction ranges having widths that are equal to or less than the set reference range in the rightward direction (direction of increasing pixel values) until the number of pixels is equal to or greater than the maximum value of the number of pixels contained in the maximum extraction gradation class. For example, the extraction ranges 421-1 through 421-6 shown in Fig. 14 are set. Furthermore, the system may also be devised so that the maximum value of the pixel values contained in the maximum extraction gradation class is used as a reference, and extraction ranges having a width that is equal to or less than the set reference range are continuously set in the leftward direction (direction of decreasing pixel values) until the number of pixels is equal to or less than the minimum value of the number of pixels contained in the minimum extraction gradation class.

The extraction range setting unit 222 supplies data indicating the distribution of the pixel values of the input image data and set extraction ranges to the image extraction unit 223.

As a result, in cases where the range between the maximum value and minimum value of the pixel values for which the number of pixels is equal to or greater than the extraction threshold value in the discriminating information of the pixel values of the input image data ((hereafter referred to as the maximum-minimum extraction object range") exceeds the set reference range, extraction ranges are set so that a plurality of contiguous extraction ranges as a whole contain the maximum-minimum extraction object range. Furthermore, in cases where the maximum-minimum extraction object range is equal to or less than the set reference range, extraction ranges which have a width that is equal to or less than the set reference range, and which contain the maximum-minimum extraction object range, are set. Accordingly, extraction ranges are set so that all of the pixel values contained in the gradation classes that are equal to or greater than the extraction threshold value are contained in the extraction ranges.

This method is especially effective in cases where the distribution of the pixel values is disperse, so that there is hardly any expression of characterizing features of the histogram by the mean value of the pixel values or the most frequent value of the pixel values, as in the histogram 402.

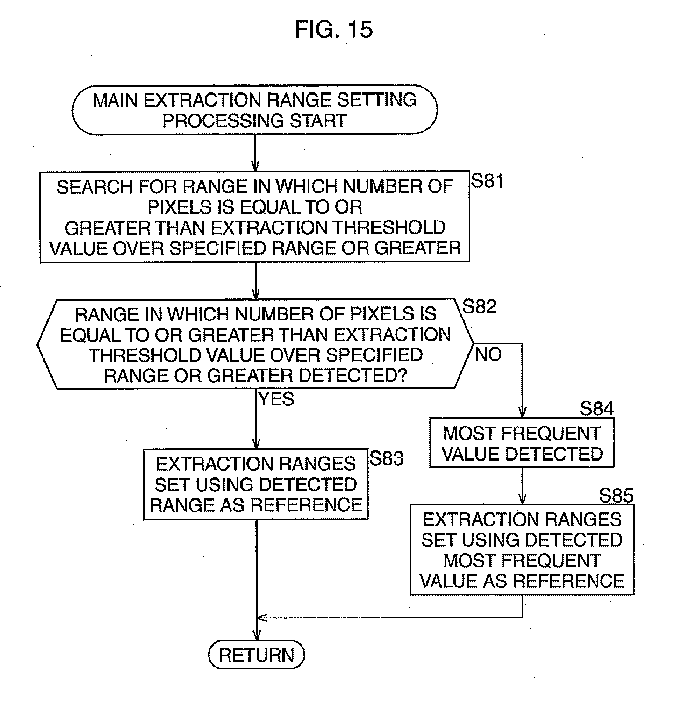

Next, the details of still another example of the main extraction range setting processing of step S3 in Fig. 7 will be described with reference to the flow chart shown in Fig. 15.

In step S81, the extraction range setting unit 222 searches for a range in which the number of pixels over a specified range or greater in the distribution of the pixel values of the input image data is equal to or greater than the extraction threshold value. In concrete terms, the extraction range setting unit 222 searches for a range (hereafter referred to as the "main extraction object range") in which a gradation class in which the number of pixels is equal to or greater than the extraction threshold value continues over a specified range (hereafter referred to as the "main threshold value range") or greater. In other words, a search is made for a histogram peak in which the width of the portion in which the number of pixels is equal to or greater than the extraction threshold value is equal to or greater than the main threshold value range.

In step S82, the extraction range setting unit 222 makes a judgment (on the basis of the results of the processing of step S81) as to whether or not a range has been detected in which the number of pixels is equal to or greater than the extraction threshold value over a specified range or greater in the distribution of the pixel values of the input image data. In cases where it is judged that such a range in which the number of pixels is equal to or greater than the extraction threshold value over such a specified range or greater, i.e., in cases where a main extraction object range is detected, the processing proceeds to step S83.

In step S83, the extraction range setting unit 222 sets extraction ranges using the detected range as a reference, and the main extraction range setting processing is ended. In concrete terms, the extraction range setting unit 222 sets extraction ranges by processing similar to that of step S62 in Fig. 13, using the detected main extraction object range as a reference. Furthermore, in cases where there are a plurality of main extraction object ranges, extraction ranges are set using the respective main extraction object ranges as a reference.

The extraction range setting unit 222 supplies data indicating the distribution of the pixel values of the input image data and the set extraction ranges to the image extraction unit 223.

As a result, for each main extraction object range in which pixel values for which the number of pixels is equal to or greater than the extraction threshold value in the distribution of the pixel values of the input image data continue over a range that is equal to or greater than the main threshold value range, in cases where the main extraction object range exceeds the set reference range, extraction ranges are set so that a plurality of contiguous extraction ranges as a whole include the main extraction object ranges. Furthermore, in cases where the main extraction object ranges are equal to or less than the set reference range, extraction ranges are set which have a width that is equal to or less than the set reference range, and which include the main extraction object ranges.

In cases where it is judged in step S82 that no range in which the number of pixels is equal to or greater than the extraction threshold value over a specified range or greater has been detected, i.e., in cases where no main extraction object range is detected, the processing proceeds to step S84.

In step S84, the most frequent value of the pixel values of the input image data is detected in the same manner as in the processing of step S41 in the abovementioned Fig. 12.

In step S85, extraction range are set using the detected most frequent value as a reference in the same manner as in the processing of step S42 in the abovementioned Fig. 12, and the main extraction range setting processing is ended.

Specifically, in step S81, in cases where no main extraction object range is detected, extraction ranges are set by processing similar to that of the flow chart shown in Fig. 12. This is processing which envisions a case in which a histogram peak having a protruding peak with a narrower range than the main threshold value range is present as a result of the pixel values being concentrated in a narrower range than the main threshold value range in the distribution of the pixel values of the input image data, and which is used to set the range of pixel values corresponding to this histogram peak as an extraction object range.

The extraction range setting unit 222 supplies data indicating the distribution of the pixel values of the input image data and the set extraction ranges to the image extraction unit 223.

Furthermore, for example, the main threshold value range is set at half of the processing gradation number. For example, in a case where the range of pixel values of the input image data that can be adopted is 16,384, while the processing gradation number is set at 1024 and the total number of gradation classes in the distribution of the pixel values of the input image data is set at 512, the main threshold value range is 64 (= (1024 ÷ 2) ÷ (16,384 ÷ 512)). Moreover, in cases where the range between two main extraction object ranges is narrower than a specified range, i.e., in cases where two main extraction object ranges approach closely to each other, the system may be devised so that processing is performed with the two main extraction object ranges combined to form a single main extraction object range.

As a result of the main extraction range setting processing shown in the flow chart in Fig. 13, pixel values for which the number of pixels is small in the distribution of the pixel values of the input image data, and pixel values corresponding to histogram peaks where the number of pixels is not continuously equal to or greater than the extraction threshold value over a range that is equal to or greater than the extraction threshold value range, can be almost completely excluded from the extraction ranges, so that the extraction ranges can be efficiently set, and so that the number of extraction ranges can be kept to a small number.

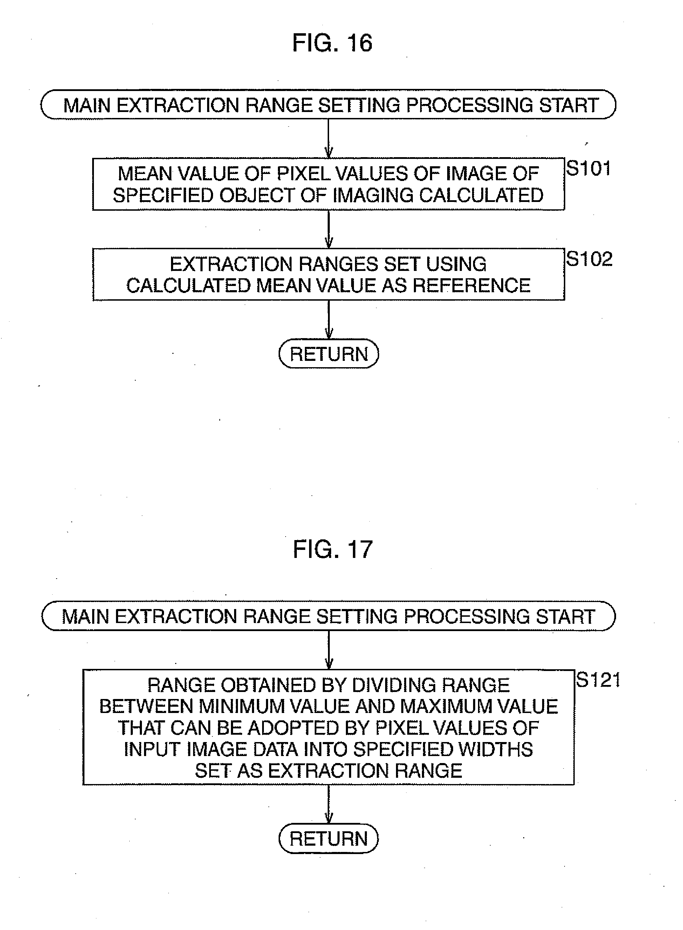

Next, the details of still another example of the main extraction range setting processing of step S3 in Fig. 7 will be described with reference to the flow chart shown in Fig. 16.

In step S101, the extraction range setting unit 222 calculates the mean value of the pixel values of an image of a specified object of imaging. In concrete terms, the extraction range setting unit 222 calculates the mean value of the pixel values within the image of a specified object of imaging detected by the image detecting unit 141, using the abovementioned image processing.

In step S102, the extraction range setting unit 222 sets extraction ranges using the calculated mean value of the pixel values as a reference, and the main extraction range setting processing is ended. In concrete terms, the extraction range setting unit 222 performs processing similar to that of step S22 in Fig. 10 using the mean value of the pixel values of an image of a specified object of imaging as a reference instead of the mean value of the pixel values of the input image data.

As a result, in cases where a range of gradation classes (pixel values) including the mean value of the pixel values of a specified object of imaging, in which the number of pixels is continuously equal to or greater than the object of extraction (hereafter referred to as the "range in which the mean values of the object of imaging are extracted"), exceeds the set reference range, extraction ranges are set so that a plurality of contiguous extraction ranges as a whole include the range in which the mean values of the object of imaging are extracted. Furthermore, in cases where the range in which the mean values of the object of imaging are extracted is equal to or less than the set reference range, extraction ranges are set which have a width that is equal to or less than the set reference range, and which are centered on the range in which the mean values of the object of imaging are extracted. Accordingly, regardless of any differences in the distribution of the pixel values of the input image data, processed image data in which all or almost all of the pixels contained in the image of the specified object of imaging are extracted from the input image data can be reliably acquired.

Next, the details of still another example of the main extraction range setting processing of step S3 in Fig. 7 will be described with reference to the flow chart shown in Fig. 17.

In step S121, the extraction range setting unit 222 sets as extraction ranges that are obtained by dividing the range between the minimum value and maximum value that can be adopted by the pixel values of the input image data into ranges having a specified width. For example, the extraction range setting unit 222 sets a total of 16 extraction ranges which are ranges obtained by dividing the range between the minimum value and maximum value that can be adopted by the pixel values of the input image data (e.g., 16,384) into ranges having the width of the set reference range (e.g., 1024).

As a result, all of the pixel values that can be adopted by the input image data, and processed image data having the necessary luminosity range (range of pixel values) can always be acquired.

Next, the details of still another example of the main extraction range setting processing of step S5 in Fig. 7 will be described with reference to the flow chart shown in Fig. 18.

In step S141, the extraction range setting unit 222 judges whether or not there are gradation classes that are not contained in the extraction ranges among the gradation classes in which the number of pixels is equal to or greater than the extraction threshold value. In cases where it is judged that there are gradation classes that are not contained in the extraction ranges among the gradation classes in which the number of pixels is equal to or greater than the extraction threshold value, the processing proceeds to step S142.

In step S142, the extraction range setting unit 222 detects the most frequent value of the gradation class not contained in the extraction ranges. Specifically, the gradation class value of the gradation class having the maximum number of pixels among the gradation classes not contained in the extraction ranges is detected. In step S143, the extraction range setting unit 222 sets the extraction ranges using the detected most frequent value as a reference, and the secondary extraction range setting processing is ended. In concrete terms, the extraction range setting unit 222 sets extraction ranges using the most frequent value detected in step S142 as a reference, by means of processing similar to that of step S42 in the abovementioned Fig. 12. Furthermore, the extraction range setting unit 222 supplies data indicating the distribution of the pixel values of the input image data and the set extraction ranges to the image extraction unit 223.

Subsequently, the processing returns to step S141, and the processing of steps S141 through S143 is repeated until it is judged in step S141 that there is no gradation class that is not contained in the extraction ranges among the gradation classes in which the number of pixels is equal to or greater than the extraction threshold value, i.e., until the pixel values contained in gradation classes in which the number of pixel values is equal to or greater than the extraction threshold value are contained in one of the extraction ranges.

In cases where it is judged in step S143 that there is no gradation class not contained in the extraction ranges among the gradation classes in which the number of pixels is equal to or greater than the extraction threshold value, the secondary extraction range setting processing is ended.

As a result, for example, ranges containing pixel values corresponding to peaks which are located in positions separated from the main histogram peak in which the pixel values are concentrated in the distribution of the pixel values of the input image data, and in which the peak values of these peaks are equal to or greater than the extraction threshold value, as in the peak 311-2 of the histogram 302 shown in Fig. 8, are set as extraction ranges. Accordingly, for example, processed image data in which all or almost all of the pixels in objects of imaging which have luminosity that differ greatly from the surrounding luminosity, and which occupy a small proportion of the viewing angle, such as the light from the headlights or taillights of other vehicles, street lights, traffic signals and the like shown in Fig. 8, are extracted from the input image data can be reliably acquired.

Furthermore, in order to keep the number of extraction ranges to a small number, the system may be devised so that the number of extraction ranges set by the secondary extraction range setting processing is limited to a specified number (e.g., one)

Next, details of the image detection processing of step S7 in Fig. 7 will be described with reference to the flow chart shown in Fig. 19.

In step S201, the image data acquisition unit 241 supplies processed image data to the lamp light detecting unit 242, vehicle body detecting unit 243, license plate detecting unit 244, pedestrian detecting unit 245, road surface paint detecting unit 246, road detecting unit 247, and traffic sign detecting unit 248. In concrete terms, the image data acquisition unit 241 estimates the ranges of the pixel values (luminosity) of images of objects of imaging that are objects of detection of the respective detecting units, and supplies processed image data including the pixel values of the estimated ranges, i.e., data that is suitable for the detection of images of the objects of imaging that constitute objects of detection of the respective detecting units, to these respective detecting units.

For instance, in the case of the example shown in Fig. 8, the image data acquisition unit 241 supplies processed image data corresponding to an extraction range 321-3, which is discrete in the direction of increasing pixel values (direction of increasing brightness) from the extraction ranges 321-1 and 321-2 in which the pixel values of the input image data are concentrated, to the lamp light detecting unit 242 and license plate detecting unit 244 which detect objects of imaging that are brighter than the surrounding areas (e.g., lights, light-emitting licenses plates (not shown in Fig. 8) or the like).

Furthermore, for example, the image data acquisition unit 241 supplies processed image data corresponding to the extraction range in which the pixel values of the input image data are most concentrated (e.g., the extraction range 371-2 in Fig. 11) to detecting units (e.g., the road detecting unit 247) that detect images of objects of imaging (e.g., roads or the like) that occupy a large region within the viewing angle of the input image data, and that consist of substantially similar pixel values.

Furthermore, for example, the image data acquisition unit 241 selects the processed image data that is supplied to the respective detecting units on the basis of differences in luminosity or the like shown by the objects of imaging that constitute the objects of detection of the respective detecting units. In the daytime, for example, the differences in luminosity between roads, lines and marks drawn on the road surfaces, persons in the vicinity of such roads, traffic signs and the like are small in most cases; accordingly, the image data acquisition unit 241 supplies the same processed image data to the pedestrian detecting unit 245, road surface paint detecting unit 246, road detecting unit 247, and traffic sign detecting unit 248.

Furthermore, for example, as was described above with reference to Fig. 10, in cases where extraction ranges are set using the mean value of the pixel values in specified regions within the input image data as a reference, the image data acquisition unit 241 supplies processed image data corresponding to extraction ranges centered on the mean values of the pixel values within these specified regions to detecting units whose objects of detection are objects of imaging that are inferred to appear within these regions.

Furthermore, for example, as was described above with reference to Fig. 16, in cases where extraction range are set using the mean values of the pixel values of images of specified objects of imaging as a reference, the image data acquisition unit 241 supplies processed image data corresponding to extraction ranges centered on the mean values of the pixel values of images of these objects of imaging to the detecting units whose objects of detection are images of these objects of imaging.

Furthermore, for example, since the luminosity of objects of imaging vary abruptly due to changes in the surrounding environment or conditions during the operation of the vehicle, it is desirable that the system be devised so that the image data acquisition unit 241 constantly supplies processed image data having a luminosity range that corresponds to changes in the environment or conditions to the respective detecting units.

For example, in the daytime, it is commonly the case that there is little difference in luminosity between objects of imaging such as license plates, vehicle bodies and road surfaces; in this case, therefore, the image data acquisition unit 241 supplies the same processed image data to the vehicle body detecting unit 243, license plate detecting unit 244, road surface paint detecting unit 246, and road detecting unit 247.

Furthermore, for example, at night and under twilight conditions, the luminosity range of traffic signs may be broad depending on the presence or absence of illumination such as vehicle headlights or the like, the presence or absence of light emission from one's own vehicle, and the like. In most cases, furthermore, traffic signs that are illuminated by illumination are brighter than the brightness of road surfaces. Accordingly, the image data acquisition unit 241 supplies processed image data corresponding to a plurality of extraction ranges, i.e., processed image data that is the same as the processed image data that is supplied to the road surface paint detecting unit 246 and road detecting unit 247, processed image data corresponding to an extraction range that is brighter than the processed image data that is supplied to the road surface paint detecting unit 246 and road detecting unit 247 and the like, to the traffic sign detecting unit 248.

Furthermore, for example, in the case of roads which have a plurality'of lanes on one side, there are cases where other vehicles travel in the same direction in adjacent lanes, and cases where bright regions illuminated by the headlights of other vehicles are generated to the front and obliquely to the right, or to the front and obliquely to the left, of one's own vehicle. In such cases, the image data acquisition unit 241 supplies processed image data having the luminosity ranges of regions illuminated by headlights, and regions not illuminated by headlights, to the road surface paint detecting unit 246 and road detecting unit 247.

In step S202, the image detecting unit 141 detects images of specified objects of imaging. In concrete terms, for example, the lamp light detecting unit 242 detects images of objects of imaging that emit light themselves, such as, for example, the illumination of vehicles, light leaking to the outside from the windows of buildings, beacons, self-lit display panels and the like from the processed image data using a technique such as template matching, neural networking or the like. The lamp light detecting unit 242 supplies data indicating the shape, position and the like of the detected images of the objects of imaging to the detection result output unit 249.

The vehicle body detecting unit 243 detects (for example) images of vehicle bodies from the processed image data using a technique such as template matching, neural networking or the like. The vehicle body detecting unit 243 supplies data indicating the shape, position and the like of the detected images of vehicle bodies to the detection result output unit 249.

For example, the license plate detecting unit 244 detects images of vehicle license plates from the processed image data using a technique such as template matching, neural networking or the like. The license plate detecting unit 244 supplies data indicating the shape, position and the like of the detected images of the objects of imaging to the detection result output unit 249.

The pedestrian detecting unit 245 detects images of persons such as pedestrians or the like, or of various types of obstructions on the road, from the processed image data using a technique such as template matching, neural networking or the like. The pedestrian detecting unit 245 supplies data indicating the shape, position and the like of the detected images of the objects of imaging to the detection result output unit 249.

For example, the road surface paint detecting unit 246 detects images of various types of lines or marls painted on the road surface, such as center lines, signs, crosswalks, stop lines and the like, from the processed image data using a technique such as template matching, neural networking or the like. The road surface paint detecting unit 246 supplies data indicating the shape, position and the like of the detected images of the objects of imaging to the detection result output unit 249.

For example, the road detecting unit 247 detects images of roads from the processed image data using a technique such as template matching, neural networking or the like. The road detecting unit 247 supplies data indicating the shape, position and the like of the detected images of the objects of imaging to the detection result output unit 249.

Furthermore, the system may also be devised so that the road detecting unit 247 acquires the detection results for road surface center line images from the road surface detecting unit 246, and detects images of roads utilizing information such as the position, shape and the like of the center lines.

For example, the traffic sign detecting unit 248 detects images of various types of traffic signs from the processed image data using a technique such as template matching, neural networking or the like. The traffic sign detecting unit 248 supplies data indicating the shape, position and the like of the detected images of the objects of imaging to the detection result output unit 249.

Furthermore, in cases where the lamp light detecting unit 242, vehicle body detecting unit 243, license plate detecting unit 244, pedestrian detecting unit 245, road surface paint detecting unit 246, road detecting unit 247 or traffic sign detecting unit 248 cannot detect images of the objects of imaging that constitute the objects of detection, other processed image data is acquired if necessary from the image data acquisition unit 241, and the detection of images of the objects of imaging constituting the objects of detection is performed from this newly acquired processed image data. In this case, the system may be devised so that the image data acquisition unit 241 estimates the range of the pixel values of the images of the objects of imaging constituting the objects of detection of the respective detecting units on the basis of the detection results acquired from detecting units that have already detected images of objects of imaging constituting these objects of detection, and the processed image data that is supplied to the respective detecting units is selected on the basis of the results of this estimation.

For example, in the case of image data in which the luminosity of the road varies greatly, as in the input image data 401 in Fig. 14, the system may be devised so that the road detecting unit 247 first detects the road inside the tunnel just ahead, and then detects the road outside the tunnel (which has a very different luminosity) on the basis of the abovementioned detection results. Furthermore, for example, a similar method can also be used in cases where there are regions illuminated by headlights and regions not illuminated by headlights at night, and the respective detecting units detect objects of imaging that have greatly varying luminosity (e.g., roads, pedestrians and the like).

Furthermore, the detection methods used to detect images of the respective objects of imaging by the lamp light detecting unit 242, vehicle body detecting unit 243, license plate detecting unit 244, pedestrian detecting unit 245, road surface paint detecting unit 246, road detecting unit 247 and traffic sign detecting unit 248 are not limited to specified methods.

In step S203, the detection result output unit 249 outputs the detection results, and the image detection processing is ended. In concrete terms, the detection result output unit 249 outputs data indicating the detection results supplied from the lamp light detecting unit 242, vehicle body detecting unit 243, license plate detecting unit 244, pedestrian detecting unit 245, road surface detecting unit 246, road detecting unit 247 and traffic sign detecting unit 248 to the processed image producing unit 132, output image producing unit 142, and an external image producing device.

For example, the external image producing device recognizes further details of the objects of imaging utilizing the detection results output from the detection result output unit 249, in order to perform automated operation of the vehicle, safety control or support of the operator.

For example, the preceding-vehicle tracking operation device, which performs automated operation tracking the preceding vehicle, can be devised so that this device performs automated operation using information relating to the preceding vehicle detected by the lamp light detecting unit 242, vehicle body detecting unit 243, and license plate detecting unit 244 (in order to recognize the preceding vehicle with good reliability), information relating to the operating lane detected using the road surface paint detecting unit 246 and road detecting unit 247, and information relating to the operation of one's own vehicle (vehicle speed, steering angle and the like).

Furthermore, for example, it is also possible to devise the system so that output image data in which images of pedestrians, obstructions or the like in front of the vehicle detected by the pedestrian detecting unit 245, images of roads detected by the road detecting unit 247, and images of center lines and roadside zone lines detected by the road surface paint detecting unit 248 are emphasized is produced by the output image producing unit 142, and images based on the output image data are displayed on a display 113 installed in a device that performs operating support, so that the operator can instantly grasp the positional relationship between pedestrians, obstructions and the like and the road during the advancing motion of the vehicle, and can thus quickly avoid danger.

In this way, image data having the necessary luminosity range (range of pixel values) can be acquired more easily. Furthermore, since there is no need for the continuous photographing of the same object of imaging while the quantity of incident light is varied, or for the simultaneous photographing of the same object of imaging by means of a plurality of image pickup apparatus in which the quantity of incident light is varied, image data for the same object of imaging having different luminosity ranges can be acquired quickly and easily.

Furthermore, since the number of gradations of the input image data can be converted in accordance with the number of gradations (number of pixel values) of image data that can be processed by the after-stage image processing apparatus, countermeasures such as the improvement of the after-stage image processing apparatus or the like are unnecessary.

Furthermore, by producing processed image data in which the pixel values of the input image data are extracted from ranges in which these pixel values are concentrated, degradation of the image quality can be suppressed compared to cases where (for example) the number of gradations of the image data is reduced by broadening the gradation width. Furthermore, by outputting processed image data in which the quantity of information is reduced from the input image data to the after-stage image processing apparatus, it is possible to reduce the load that is required for the image processing of the after-stage image processing apparatus.

Furthermore, by extracting processed image data having different luminosity ranges from input image data that is picked up by the same image pickup apparatus (optical system), it is possible to prevent the occurrence of any deviation in the position or time of images between respective processed image data generated in cases where continuous image pickup of the same objects of imaging is performed while varying the quantity of the incident light, or in cases where the same object of imaging is simultaneously photographed by a plurality of image pickup apparatus in which the quantity of incident light is varied. Accordingly, for example, there is no need to perform detection processing that detects variation in the position or brightness of images between respective sets of processed image data, or correction processing that corrects for deviations in the position or time of images in order to maintain compatibility between respective sets of processed image data. Accordingly, the processing time of an image processing apparatus utilizing this processed image data can be shortened, and the load on this image processing apparatus can be lightened.

Furthermore, the present invention has an especially great effect in cases where input image data with a dynamic range that is broader than approximately 70 dB (considered to be the maximum value of the dynamic range of the luminosity of image data that is picked up by means of an image pickup apparatus using a conventional CCD image pickup element or CMOS image pickup apparatus, i.e., in cases where input image data picked up at a dynamic range that does not allow pickup at one time in the case of an image pickup apparatus using a conventional CCD image pickup element or CMOS image pickup apparatus is processed.

Furthermore, in the above description, an example was indicated in which the image processing system 101 was used in a case where image detection processing of images of objects of imaging located in front of the vehicle was performed. However, this image processing system 101 may also be used in image detection processing of other objects of imaging.

Furthermore, the image conversion unit 121 and image detection processing unit 122 may also be formed as separate devices.

Furthermore, the processed image data that is output from the processed image producing unit 132 is not limited to image detection processing, but can also be utilized in other image processing (e.g., image recognition processing, image verification processing or the like).

Furthermore, in cases where the image processing system 101 is utilized as an automated operation support device in a vehicle, it is important that images of specified objects of imaging be detected in real time. Accordingly, the system may be devised so that a plurality of each of the respective detecting units are installed, and image detection processing based on processed image data corresponding to different extraction ranges is simultaneously performed. For example, it would also be possible to install a plurality of road detecting units 247 so that roads having a broad brightness range, e.g., inside and outside of tunnels, or regions immediately in front of the vehicle which are illuminated by headlights, and distant regions (or the like), can be detected at one time. Furthermore, as was described above, since there are cases where the luminosity of traffic signs varies greatly from sign to sign, it would also be possible to install a plurality of traffic sign detecting units 248, so that a plurality of traffic signs can be detected at one time.

The abovementioned series of processing operations can be executed by means of hardware, or can be executed by means of software. In cases where this series of processing operations is executed by means of software, the programs that constitute this software can be installed (from a network or recording medium) in a computer assembled with dedicated hardware, or (for example) an all-purpose personal computer which can be caused to execute various types of functions by installing various types of programs.

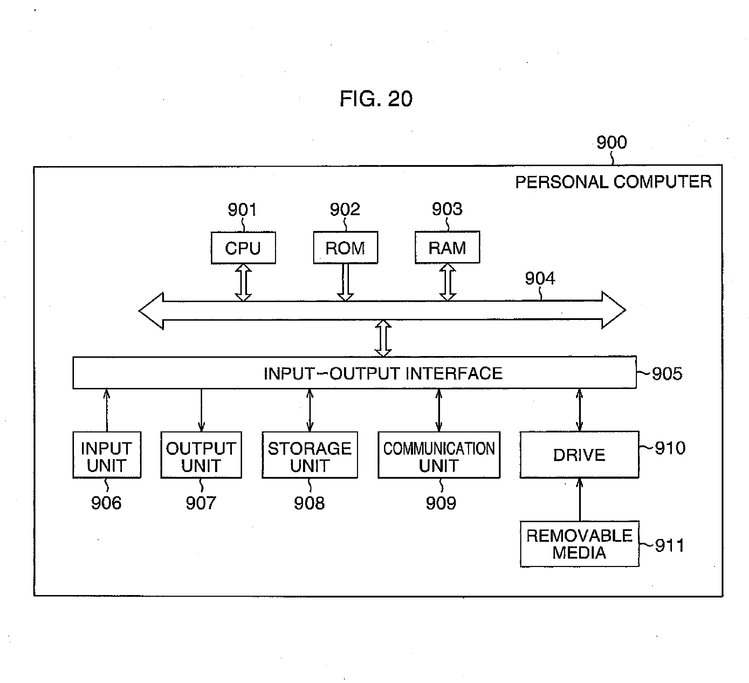

Fig. 20 is a diagram showing an example of the internal construction of an all-purpose personal computer 900. The CPU (central processing unit) 901 executes various types of processing in accordance with programs that are stored in a ROM (read only memory) 902 or loaded into a RAM (random access memory) 903 from a storage unit 908. Data or the like required by the CPU 901 in order to execute various types of processing is also stored in the RAM 903.

The CPU 901, ROM 902 and RAM 903 are connected to each other via a bus 904. Furthermore, an input-output interface 905 is also connected to this bus 904.

An input unit 906 constructed from a button, switch, keyboard, mouse or the like, an output unit 907 constructed from a display such as a CRT (cathode ray tube), LCD (liquid crystal display) or the like, and a speaker or the like, a storage unit 908 constructed from a hard disk or the like, and a communication unit 909 constructed from a modem, terminal adapter or the like, are connected to the input-output interface 905. The communication unit 909 performs communication processing via a network (including the internet).

If necessary, furthermore, a drive 910 is connected to the input-output interface 905, a removable medium 921 consisting of magnetic disk, optical disk, optical-magnetic disk, semiconductor memory or the like is appropriately mounted, and computer programs that are read out from this medium are installed in the storage unit 908.

As is shown in Fig. 20, the recording media that record programs which are installed in a computer and placed in a state that allows execution by this computer are constructed not only from removable media 911 consisting of magnetic disks (including flexible disks), optical disks (including CD-ROM (compact disk - read only memories) and DVD (digital versatile disks)), optical-magnetic disks (including MD (Mini-disks) (registered trademark)), semiconductor memories or the like, which are distributed in order to provide programs to the user separately from the device proper, but also from hard disks or the like contained in the ROM 903 or storage unit 908, which are provided to the user in a state in which these media are assembled beforehand in the device proper.

Furthermore, in the present specification, the steps describing programs accommodated in a program accommodating medium naturally include processing that is performed in a time series in the order in which these steps are described, but also includes processing that is executed in parallel or separately even if this processing is not always performed in the manner of a time series.

Furthermore, in the present specifically, the term "system" refers to the overall device constructed from a plurality of devices, means and the like.

## Claims

1. An image processing apparatus comprising:
range setting means for setting one or more extraction ranges constituting first ranges having not more than a specified first width of pixel values of first pixel data that is input; and
image data production means for producing one or more sets of second image data by extracting pixels having pixel values contained in the extraction ranges from the first image data.

2. The image processing apparatus according to claim 1, further comprising distribution detection means for detecting the distribution of the pixel values of the input first image data, wherein,
the range setting means sets the extraction ranges on the basis of the distribution of the pixel values of the first image data.

3. The image processing apparatus according to claim 2, wherein the extraction ranges include the first ranges which are centered on mean values of the pixel values of the first image data.

4. The image processing apparatus according to claim 2, wherein the extraction ranges include the first ranges which are centered on mean values of the pixel values of the images of specified regions within the first image data.

5. The image processing apparatus according to claim 2, wherein the extraction ranges include the first ranges which are centered on the pixel values for which the number of pixels reaches a maximum in the distribution of the pixel values of the first image data.

6. The image processing apparatus according to claim 3, wherein
in cases where pixel values not contained in the extraction ranges exist among pixel values for which the number of pixels is equal to or greater than a specified threshold value in the distribution of the pixel values of the first image data, the range setting means further sets the extraction ranges constituting the first ranges which are centered on the pixel values for which the number of pixels reaches a maximum among pixel values not contained in the extraction ranges.

7. The image processing apparatus according to claim 3, wherein
in cases where pixel values not contained in the extraction ranges exist among pixel values for which the number of pixels is equal to or greater than the threshold value in the distribution of the pixel values of the first image data, the range setting means repeatedly sets the extraction ranges constituting the first ranges which are centered on the pixel values for which the number of pixels reaches a maximum among pixel values not contained in the extraction ranges until the pixel values for which the number of pixels is equal to or greater than the threshold value are contained in one of the extraction ranges.

8. The image processing apparatus according to claim 2, wherein
in cases where a second range of pixel values, which is a range of pixel values including the mean value of the pixel values of the first image data, and in which the number of pixels is continuously equal to or greater than a specified threshold value, exceeds the first width, the range setting means sets the extraction ranges so that a plurality of the contiguous extraction ranges as a whole include the second range, and
in cases where the second range is equal to or less than the first width, the range setting means sets the extraction ranges constituting the first ranges which are centered on the mean values of the pixel values of the first image data.

9. The image processing apparatus according to claim 8, wherein
in cases where pixel values that are not contained in the extraction ranges exist among the pixel values for which the number of pixels is equal to or greater than the threshold value in the distribution of the pixel values of the first image data, the range setting means further sets the extraction ranges constituting the first ranges which are centered on pixel values for which the number of pixels reaches a maximum among the pixel values not contained in the extraction ranges.

10. The image processing apparatus according to claim 8, wherein
in cases where pixel values that are not contained in the extraction ranges exist among the pixel values for which the number of pixels is equal to or greater than the threshold value in the distribution of the pixel values of the first image data, the range setting means repeatedly sets the extraction ranges constituting the first ranges which are centered on pixel values for which the number of pixels reaches a maximum among the pixel values not contained in the extraction ranges until the pixel values for which the number of pixels is equal to or greater than the threshold value are contained in one of the extraction ranges.

11. The image processing apparatus according to claim 2, wherein
the range setting means is devised so that in cases where a second range of pixel values, which is a range including the pixel values for which the number of pixels reaches a maximum in the distribution of the pixel values of the first image data, and in which the number of pixels is continuously equal to or greater than a specified threshold value, exceeds the first width, the range setting means sets the extraction ranges so that a plurality of the contiguous extraction ranges as a whole include the second range, and
in cases where the second range is equal to or less than the first width, the range setting means sets the extraction ranges constituting the first ranges which are centered on the pixel values for which the number of pixels reaches a maximum in the distribution of the pixel values of the first image data.

12. The image processing apparatus according to claim 11, wherein
in cases where pixel values that are not contained in the extraction ranges exist among the pixel values for which the number of pixels is equal to or greater than the threshold value in the distribution of the pixel values of the first image data, the range setting means further sets the extraction ranges constituting the first ranges which are centered on pixel values for which the number of pixels reaches a maximum among the pixel values not contained in the extraction ranges.

13. The image processing apparatus according to claim 11, wherein
in cases where pixel values that are not contained in the extraction ranges exist among the pixel values for which the number of pixels is equal to or greater than the threshold value in the distribution of the pixel values of the first image data, the range setting means repeatedly sets the extraction ranges constituting the first ranges which are centered on pixel values for which the number of pixels reaches a maximum among the pixel values not contained in the extraction ranges until the pixel values for which the number of pixels is equal to or greater than the threshold value are contained in one of the extraction ranges.

14. The image processing apparatus according to claim 2, wherein
in cases where the second range between the minimum and maximum values of the pixel values for which the number of pixels is equal to or greater than a specified threshold value in the distribution of the pixel values of the first image data exceeds the first width, the range setting means sets the extraction ranges so that a plurality of the contiguous extraction ranges as a whole include the second range, and
in cases where the second range is equal to or less than the first width, the range setting means sets the extraction ranges constituting the first ranges which include the second range.

15. The image processing apparatus according to claim 2, wherein
in cases where the second ranges exceed the first width for respective second ranges in which pixel values for which the number of pixels is equal to or greater than a specified threshold value in the distribution of the pixel values of the first image data continue over at least a specified second width of the pixel values, the range setting means sets the extraction ranges so that a plurality of the contiguous extraction ranges as a whole include the second ranges, and
in cases where the second ranges are equal to or less than the first width, the range setting means sets the extraction ranges constituting the first ranges which include the second ranges.

16. The image processing apparatus according to claim 1, wherein
the range setting means sets the extraction ranges constituting the first ranges in which the second range between the minimum and maximum values that can be adopted by the pixel values of the first image data is divided into the first widths.

17. The image processing apparatus according to claim 1, further comprising photographed object detection means for detecting specified objects of imaging within the second image data.

18. The image processing apparatus according to claim 1, wherein the dynamic range of the luminosity of the first image data is 70 dB or greater.

19. The image processing apparatus according to claim 1, wherein the first image data is output by an image pickup apparatus having a logarithm conversion type image pickup element which outputs pixel values that are substantially proportional to the logarithm of the quantity of incident light, in use of sub-threshold characteristics of a semiconductor.

20. An image processing method comprising:
a range setting step for setting one or more extraction ranges that are equal to or less than a specified width of pixel values of first image data that is input; and
an image data production step in which one or more sets of second image data are produced by extracting pixels whose pixel values are contained in the extraction ranges, from the first image data.

21. A program comprising:
a range setting step for setting one or more extraction ranges that are equal to or less than a specified width of pixel values of first image data that is input; and
an image data production step in which one or more sets of second image data are produced by extracting pixels whose pixel values are contained in the extraction ranges, from the first image data.

22. A recording medium on which the program according to claim 21 is recorded.
